(19) Europäisches Patentamt
European Patent Office
Office européen des brevets

(11) EP 1 857 482 A1

(12) **EUROPEAN PATENT APPLICATION**
published in accordance with Art. 158(3) EPC

(43) Date of publication:
**21.11.2007 Bulletin 2007/47**

(21) Application number: **06715684.4**

(22) Date of filing: **09.03.2006**

(51) Int Cl.:
*C08G 61/12* (2006.01) *H01B 1/06* (2006.01)
*H01M 8/02* (2006.01) *H01M 8/10* (2006.01)

(86) International application number:
**PCT/JP2006/305193**

(87) International publication number:
**WO 2006/095919 (14.09.2006 Gazette 2006/37)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.03.2005 JP 2005066755**
**30.11.2005 JP 2005345220**

(71) Applicant: **Sumitomo Chemical Company, Limited**
**Tokyo 104-8260 (JP)**

(72) Inventors:
- **ONODERA, Toru**
**Tsukuba-shi, Ibaraki 3003261 (JP)**
- **YAMADA, Takashi**
**Tsukuba-shi, Ibaraki 3050821 (JP)**
- **SASAKI, Shigeru**
**Tsukuba-shi, Ibaraki 3003261 (JP)**
- **SUENOBU, Katsuhiro**
**Tsukuba-shi, Ibaraki 3050045 (JP)**
- **KAMIKAWA, Takashi**
**Nara-shi, Nara 6308442 (JP)**
- **HIDA, Noriyuki**
**Osaka-shi, Osaka 5548558 (JP)**

(74) Representative: **Vossius & Partner**
**Siebertstrasse 4**
**81675 München (DE)**

(54) **POLYARYLENE BLOCK COPOLYMER AND USE THEREOF**

(57) Provided is a polyarylene type block copolymer comprising a block having an ion exchange group and a block having substantially no ion exchange group, wherein the main chain of the block having an ion exchange group has a polyarylene structure in which a plurality of aromatic rings are directly connected, and the ion exchange group is directly bonded to the aromatic ring composing the main chain; a method for production thereof; and a use thereof.

EP 1 857 482 A1

## Description

### TECHNICAL FIELD

The present invention relates to a polyarylene type block copolymer, specifically to a polyarylene type block copolymer preferably used as a polymer electrolyte, above all, as a proton conductive membrane for fuel cells and use thereof.

### BACKGROUND ART

As conductive membranes for a primary battery, a secondary battery or a solid polymer type fuel cell, polymer electrolyte membranes using polymers having proton conductivity have been used. For example, as typified by Nafion (trademark of E. I. Du Pont), there has been conventionally mainly used a polymer electrolyte comprising an aliphatic polymer as an effective component, which has a perfluoroalkylsulfonic acid in the side chain as a super strong acid, the main chain of which is perfluoroalkane, because a power generation characteristic is excellent when it is used as a membrane material for fuel cells. However, there have been pointed out the problems that such kind of material is very expensive, heat resistance is low, and membrane strength is too low to be put into practical use without some reinforcement.

In view of these situations, there has been actively developed a polymer electrolyte with low costs and excellent characteristics capable of replacing the above-described polymer electrolyte, and a polyarylene type polymer electrolyte having polyphenylene in the main chain structure has been studied.

For example, there is proposed a polyarylene type polymer electrolyte which has a phenylene unit with a substituent as a repeating structure, the substituent being an aromatic group having a sulfonic acid group in a flexible side chain such as a sulfophenoxybenzoyl group (US Patent No. 5,403,675). However, this polyarylene type polymer electrolyte is constituted by a rigid polyphenylene bone structure, and has a problem in an aspect of mechanical characteristics such as breaking elongation.

As the sulfonated polyphenylene having such rigid polyphenylene bone structure, there is disclosed a polymer obtained by Ullmann condensation of 3,3'-disulfo-4,4'-dibromobiphenyl in Polymer Materials Science & Engineering, 2003, 89, 438, showing a high proton conductivity of this polymer.

As improving methods for the above-described mechanical strength, for example, in Japanese Unexamined Patent Publication Nos. 2001-342241 and 2003-113136, proposed is a polyarylene type polymer electrolyte which has a phenylene unit with an aromatic substituent having an sulfonic acid group at terminal as described above and a unit with a flexible structure in the main chain as repeating units, and mechanical characteristics such as breaking elongation are improved by having a unit with a flexible structure in the main chain.

However, in the case where the polyarylene type polymer electrolyte described above is used as a proton conductive membrane for a solid polymer type fuel cell, there have been the problems that humidity dependence of proton conductivity is large and the ratio of dimensional change is large upon swelling by water uptake.

It is an object of the present invention to provide a polyarylene type block copolymer with small humidity dependence of proton conductivity and a small ratio of dimensional change upon swelling by water uptake when it is used as an electrolyte membrane; a polymer electrolyte comprising the block copolymer as an effective component; a polymer electrolyte membrane using the polymer electrolyte; a polymer electrolyte composite membrane using the polymer electrolyte and a porous base material; a catalyst composition using the polymer electrolyte: and a polymer electrolyte type fuel cell using them.

### DISCLOSURE OF THE INVENTION

The present inventors have keenly studied to find a polymer with more excellent performance as a polymer electrolyte suitable for a proton conductive membrane or a catalyst layer of fuel cells, and as a result, have found that the following can solve the above-mentioned problems and completed the present Invention: a block copolymer comprising a block having an ion exchange group and a block having substantially no ion exchange group wherein the bond mode of the ion exchange group in the block having the ion exchange group and its sequence are devised into a specific structure.

Namely, the present invention provides [1] a polyarylene type block copolymer comprising one or more blocks having an ion exchange group and one or more blocks having substantially no ion exchange group, wherein the main chain of the block having an ion exchange group has a polyarylene structure in which a plurality of aromatic rings are directly connected, and the ion exchange group is directly bonded to the aromatic ring composing the main chain. A polymer electrolyte membrane obtained by such polyarylene type block copolymer has small humidity dependence of proton conductivity and a small ratio of dimensional change upon swelling by water uptake, and is a very useful polymer

electrolyte membrane for fuel cells.

Herein, the term "main chain of block" represents a molecular chain capable of becoming a main chain of a polyarylene type block copolymer when the copolymer is produced, and the term "polyarylene structure" represents a structure in which a plurality of aromatic rings are connected each other by a direct bond (single bond) as described above.

Further, the present invention provides a polyarylene type block copolymer shown in the following [2] and [3] as a preferable block having an ion exchange group and a preferable block having substantially no ion exchange group in the polyarylene type block copolymer.

[2] The polyarylene type block copolymer described in [1], wherein the block having an ion exchange group has a structural unit represented by the following general formula (1):

$$-\left(Ar^1\right)_m- \quad (1)$$

wherein m represents an integer of 5 or more, $Ar^1$ represents a divalent aromatic group, herein, the divalent aromatic group may be substituted by a fluorine atom, an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent; $Ar^1$ has at least one ion exchange group directly bonded to the aromatic ring composing the main chain.

[3] The polyarylene type block copolymer described in [1] or [2], wherein the block having substantially no ion exchange group contains a repeating structure represented by the following general formula (2):

$$-\left[\left[\left(Ar^2-X\right)_a Ar^3-Y-\left[\left(Ar^4-X'\right)_b Ar^5-Y'\right]_c\right]_n\left(Ar^2-X\right)_a Ar^3\right]- \quad (2)$$

wherein a, b and c each independently represent 0 or 1, n represents an integer of 5 or more, $Ar^2$, $Ar^3$, $Ar^4$ and $Ar^5$ each independently represent a divalent aromatic group, herein, these divalent aromatic groups may be substituted by an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent; X and X' each independently represent a. direct bond or a divalent group, Y and Y' each independently represent an oxygen atom or a sulfur atom.

Further, as the block having an ion exchange group, when a degree of polymerization m in the repeating unit of the aromatic ring having an ion exchange group represented by the general formula (1) is large, it is preferable because a polymer electrolyte membrane with practical ion exchange capacity for a polymer electrolyte membrane for fuel cells is obtained, and a polyarylene type block copolymer shown in the following [4] is provided.

[4] The polyarylene type block copolymer described in [2] or [3], wherein the block having an ion exchange group has a structural unit of 20 or more of m in said general formula (1).

Further, the ion exchange group is more preferably an acid group, which provides:

[5] The polyarylene type block copolymer described in any one of [1] to [4], wherein the ion exchange group is an acid group of any one of a sulfonic acid group, a sulfonimide group, a phosphonic acid group, and a carboxylic acid group.

Among the ion exchange groups, a sulfonic acid group with high acidity is particularly preferable, and as the block having the ion exchange group, a block shown in the following [6] is preferred.

[6] The polyarylene type block copolymer described in any one of [2] to [5], wherein the block having an ion exchange group is represented by the following general formula (3):

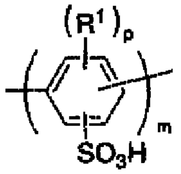

(3)

wherein m has the same definition as described above, $R^1$ represents a substituent selected from a fluorine atom, an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent; p is an integer of 0 or more but not more than 3.

Herein, a phenylene group composing the main chain of the block may have a substituent $R^1$, and as the substituent, a substituent which does not substantially react in a polymerization reaction process described later is preferable. Further, when p is 2 or 3, a plurality of $R^1$s on the same benzene ring may be the same or different. Moreover, in the block, $R^1$ and p per one repeating unit each may be the same or different.

As described above, the block having an ion exchange group in the polyarylene type block copolymer of the present invention preferably has a sulfonic acid group which is a preferable ion exchange group and a large degree of polymerization m in said general formula (1), and as the preferable block, there can be mentioned the polyarylene type block copolymer shown in the following [7] and [8].

[7] The polyarylene type block copolymer described in any one of [2] to [6], wherein the block having an ion exchange group is represented by the following general formula (4):

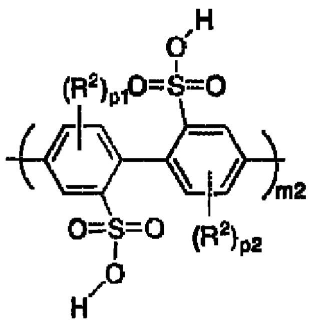

(4)

wherein $R^2$ is a substituent selected from a fluorine atom, an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent; m2 is an integer of 3 or more, p1 and p2 each are an integer of 0 or more but not more than 3.

Further, a phenylene group composing the main chain of the block in said general formula (4) may have a substituent $R^2$, and as the substituent, a substituent which does not substantially react in a polymerization reaction process described later is preferable. Moreover, when p1 or p2 is 2 or 3, a plurality of $R^2$s on the same benzene ring may be the same or different. Further, in the block represented by said general formula (4), $R^2$ p1 and p2 per one repeating unit each composing the main chain may be the same or different.

[8] The polyarylene type block copolymer described in [6] or [7], wherein the block having an ion exchange group has a structure represented by said general formula (3), when a connection constitution of aromatic rings in the main chain is represented by the three connection modes of (3a). (3b) and (3c) defined below and the constituent ratio of the combination connection modes is denoted as a TP value shown in the following equation (I), the TP value is 0.6 or less:

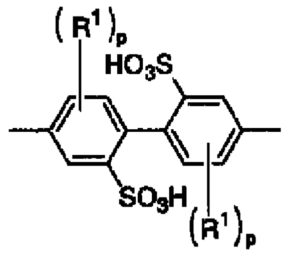

(3a)

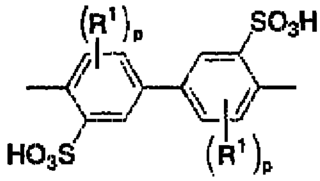

(3b)

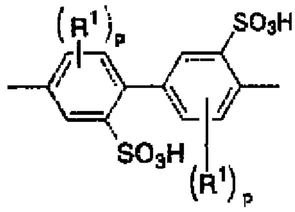

or

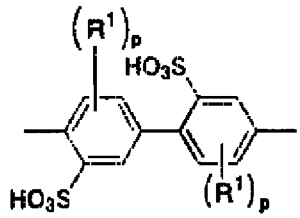

(3c)

wherein $R^1$ and p have the same definitions as in said general formula (3);

$$\text{TP value} = n_c / (n_a+n_b+n_c) \qquad (I)$$

wherein $n_a$ is the number of connection modes shown in the above-described (3a), $n_b$ is the number of connection modes shown in the above-described (3b), and $n_c$ is the number of connection modes shown in the above-described (3c).

Further, there are provided the following [9] to [13] involved in production of the polyarylene type block copolymer shown in any one of [1] to [8].

[9] A method for production of a polyarylene type block copolymer, comprising copolymerization of a compound represented by $Q\text{-}Ar^1\text{-}Q$ wherein $Ar^1$ has the same definitions as in said general formula (1), Q represents a leaving group; and/or a compound represented by the following general formula (5): and a compound represented by the following general formula (6):

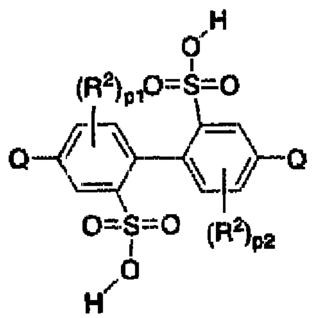

(5)

wherein $R^2$, p1 and p2 have the same definitions as in said general formula (4), Q represents a leaving group;

$$Q-\left[\left[\left(Ar^2-X\right)_a Ar^3-Y-\left[\left(Ar^4-X'\right)_b Ar^5-Y'\right]_c\right]_n\left(Ar^2-X\right)_a Ar^3\right]-Q \qquad (6)$$

wherein $Ar^2$. $Ar^3$, $Ar^4$, $Ar^5$, a. b, c, n, X, X', Y, and Y' have the same definitions as in said general formula (2), Q represents a leaving group.

[10] The method for production of a polyarylene type block copolymer described in [9], comprising copolymerization of a compound represented by $Q-Ar^1-Q$ wherein $Ar^1$ has the same definition as in said general formula (1), Q represents a leaving group; and/or a compound represented by said general formula (5) or a salt thereof; and a compound represented by said general formula (6) under the coexistence of a nickel complex.

[11] The method for production described in [10], wherein the nickel complex is a complex comprising bis(cyclooctadiene) nickel (0) and 2.2'-bipyridyl.

[12] The method for production described in [10], wherein the nickel complex is a complex comprising nickel halide and 2,2'-bipyridyl, and zinc coexists.

[13] A polyarylene type block copolymer obtained by the method for production described in any one of [9] to [12]. Further, the block having substantially no ion exchange group is preferable for production when X and X' are a specific group in said general formula (2), and [13] can be mentioned.

[14] The polyarylene type block copolymer described in any one of [1] to [8] and [13], wherein the block having substantially no ion exchange group is a block having a repeating structure represented by the following general formula (2a):

$$-\left[\left[\left(Ar^2-X^a\right)_a Ar^3-Y-\left[\left(Ar^4-X^b\right)_b Ar^5-Y'\right]_c\right]_n\left(Ar^2-X^a\right)_a Ar^3\right]- \qquad (2a)$$

wherein $Ar^2$, $Ar^3$, $Ar^4$, $Ar^5$, a, b, c, n, Y, and Y' have the same definitions as in said general formula (2), $X^a$ and $X^b$ each independently represent a divalent group selected from the group consisting of a direct bond, a carbonyl group, a sulfonyl group, a 2,2-isopropylidene group, a 2,2-hexafluoroisopropylldene group and a 9,9-fluorenedlyl group.

Among the polyarylene type block copolymer described above, the following is preferable as use involved in proton conductive membranes for fuel cells.

[15] The polyarylene type block copolymer described in any one of [1] to [8] and [13] to [14], wherein the ion exchange capacity is 0.5 meq/g to 4.0 meq/g.

Further, the following is provided.

[16] A polymer electrolyte comprising the polyarylene type block copolymer of any one of the foregoing descriptions as an effective component. Herein, the term "effective component" means a component involved substantially in proton conduction when it is employed as a polymer electrolyte (composite) membrane or a catalyst layer in a fuel cell described later.

The polymer electrolyte described in [16] is preferably used as a member of a fuel cell, specifically, the following [17] to [19] are exemplified.

[17] A polymer electrolyte membrane using the polymer electrolyte described above.

[18] A polymer electrolyte composite membrane using the polymer electrolyte described above and a porous base material.

[19] A catalyst composition containing the polymer electrolyte described above.

The present invention further provides the following polymer electrolyte type fuel cell using the above-described member.

[20] A polymer electrolyte type fuel cell using the polymer electrolyte membrane described in [17] or the polymer electrolyte composite membrane described in [18].

[21] A polymer electrolyte type fuel cell having a catalyst layer obtained by using the catalyst composition described in [19].

BEST MODE FOR CARRYING OUT THE INVENTION

The polyarylene type block copolymer of the present invention is characterized by comprising one or more blocks having an ion exchange group and one or more blocks having substantially no ion exchange group, wherein the

block having an ion exchange group has a polyarylene structure in which aromatic rings are directly connected, further, the ion exchange group is directly bonded to the aromatic ring of the main chain.

Herein, the term "ion exchange group" is a group having ion conductivity, in particular, proton conductivity when the polyarylene type block copolymer of the present invention is used as a membrane, "having an ion exchange group" means that the number of ion exchange groups per repeating unit is about 0.5 or more on average, and "having substantially no ion exchange group' means that the number of ion exchange groups per repeating unit is about 0.1 or less on average.

The polyarylene type block copolymer can give a membrane with extremely small humidity dependence in proton conductivity when converted into a membrane form, and as a member for a fuel cell, which can provide stable power generation performance in a low humidity state upon start-up of a cell and also in a state where the humidity is improved to some degree after prolonged operation of a cell. Further, the membrane is also excellent in dimensional stability against water uptake, and extremely small in stress due to swelling by water uptake and shrinkage by drying of a polymer electrolyte membrane accompanied with repeated operation and stop of a cell, thus, deterioration of the membrane can be suppressed, thereby achieving a longer operating life of the cell itself.

As the block having an ion exchange group according to the polyarylene type block copolymer of the present invention, the block represented by said general formula (1) is preferable. Further, a copolymerized block of the block represented by said general formula (1) with another repeating structure which has 0.5 or more ion exchange groups on average per repeating unit may be preferable. In the case of the copolymerized block with another repeating structure, the content of the block represented by the general formula (1) is preferably 50 mol% to 100 mol%, particularly preferably 70 mol% to 100 mol% because of sufficient proton conductivity as a polymer electrolyte for a fuel cell.

Herein, m in the general formula (1) represents an integer of 5 or more, and a range thereof is preferably from 5 to 1000, more preferably from 10 to 1000, and particularly preferably from 20 to 500. When a value of m is 5 or more, it is preferable because proton conductivity is sufficient as a polymer electrolyte for a fuel cell. When a value of m is 1000 or less, it is preferable because production is easy.

Further, in the case where a block having an ion exchange group is a copolymerized block with another repeating structure, the block represented by said general formula (1) is included in the copolymerized block.

$Ar^1$ in said general formula (1) represents a divalent aromatic group. As the divalent aromatic group, for example, there can be mentioned divalent monocyclic aromatic groups such as 1,3-phenylene group and 1,4-phenylene group: divalent condensed aromatic groups such as 1,3-naphthalenediyl group, 1,4-naphthalenediyl group, 1,5-naphthalenediyl group, 1,6-naphthalenediyl group, 1,7-naphthalenediyl group, 2,6-naphthalenediyl group, and 2.7-naphthalenediyl group; divalent aromatic heterocyclic groups such as pyridinediyl group, quinoxalinediyl group and thiophenediyl group. A divalent monocyclic aromatic group is preferred.

Further, $Ar^1$ may be substituted by a fluorine atom, an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent.

Herein, an alkyl group having 1-20 carbon atoms that may have a substituent includes, for example, alkyl groups having 1-20 carbon atoms such as methyl group, ethyl group, n-propyl group, isopropyl group, n-butyl group, sec-butyl group, isobutyl group, n-pentyl group, 2,2-dimethylpropyl group, cyclopentyl group, n-hexyl group, cyclohexyl group, 2-methylpentyl group, 2-ethylhexyl group, nonyl group, dodecyl group, hexadecyl group, octadecyl group and icosyl group; and alkyl groups having 20 or less total carbon atoms in which these groups are substituted by a fluorine atom, a hydroxyl group, nitrile group, amino group, methoxy group, ethoxy group, isopropyloxy group, phenyl group, naphthyl group, phenoxy group or naphtyloxy group.

Further, an alkoxy group having 1-20 carbon atoms that may have a substituent includes, for example, alkoxy groups having 1-20 carbon atoms such as methoxy group, ethoxy group, n-propyloxy group, isopropyloxy group, n-butyloxy group, sec-butyloxy group, tert-butyloxy group, isobutyloxy group, n-pentyloxy group, 2,2-dimethylpropyloxy group, cyclopentyloxy group, n-hexyloxy group, cyclohexyloxy group, 2-methylpentyloxy group, 2-ethylhexyloxy group, dodecyloxy group, hexadecyloxy group, and icosyloxy group; and alkoky groups having 20 or less total carbon atoms in which these groups are substituted by a fluorine atom, a hydroxyl group, nitrile group, amino group, methoxy group, ethoxy group, isopropyloxy group, phenyl group, naphthyl group, phenoxy group or naphtyloxy group

An aryl group having 6-20 carbon atoms that may have a substituent includes, for example, aryl groups such as phenyl group, naphtyl group, phenanthrenyl group and anthracenyl group; and aryl groups having 20 or less total carbon atoms in which these groups are substituted by a fluorine atom, a hydroxyl group, nitrile group, amino group, methoxy group, ethoxy group, isopropyloxy group, phenyl group, naphthyl group, phenoxy group or naphtyloxy group.

An aryloxy group having 6-20 carbon atoms that may have a substituent includes, for example, aryloxy groups such as phenoxy group, naphtyloxy group, phenanthrenyloxy group and anthracenyloxy group; and aryloxy groups having 20 or less total carbon atoms in which these groups are substituted by a fluorine atom, a hydroxyl group, nitrite group, amino group, methoxy group, ethoxy group, isopropyloxy group, phenyl group, naphthyl group, phenoxy group

or naphtyloxy group.

An acyl group having 2-20 carbon atoms that may have a substituent includes, for example, acyl groups having 2-20 carbon atoms such as acetyl group, propyonyl group, butyryl group, isobutyryl group, benzoyl group, 1-naphthoyl group and 2-naphthoyl group; and acyl groups having 20 or less total carbon atoms in which these groups are substituted by a fluorine atom, a hydroxyl group, nitrile group, amino group, methoxy group, ethoxy group, isopropyloxy group, phenyl group, naphthyl group, phenoxy group or naphtyloxy group.

$Ar^1$ has at least one ion exchange group in the aromatic ring composing the main chain. As the ion exchange group, an acid group is usually used. As the acid group, there can be mentioned acid groups such as weak acid, strong acid and super strong acid, and a strong acid group and a super strong acid group are preferable. Examples of the acid group include, for example, weak acid groups such as phosphonic acid group and carboxylic acid group; and strong acid groups such as sulfonic acid group, sulfonimide group ($-SO_2-NH-SO_2-R$ wherein R represents a monovalent substituent such as an alkyl group or an aryl group), among them, a sulfonic acid group and a sulfonimide group being strong acid groups are preferably used. Further, by replacing a hydrogen atom on a substituent (-R) of the aromatic ring and/or sulfonimide group by an electron-withdrawing group like a fluorine atom, it is also preferable that the strong acid group is functioned as a super strong acid group due to the effect of an electron-withdrawing group such as a fluorine atom.

A part of or all of these ion exchange groups may be exchanged with a metal ion or a quarternary ammonium ion to form salts, but in the case of using as a polymer electrolyte membrane for a fuel cell, it is preferable that substantially all of them are in a free acid state.

As preferable examples of the structural unit shown in said general formula (1), the structural unit represented by the following general formula (3) can be mentioned. The block having such structural unit is preferable because it can use a raw material easily available from the market for production of the block described later:

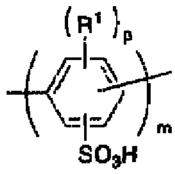

(3)

wherein m has the same definition as described above. $R^1$s are the same or different, and $R^1$ represents a substituent selected from a fluorine atom, an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent; p is an integer of 0 or more but not more than 3.

Herein, $R^1$ is selected from an alkyl group, an alkoxy group, an aryl group and an acyl group exemplified as a substituent of said $Ar^1$, and is a group not disturbing the reaction in a polymerization reaction described later. The number of substituents p is preferably 0 or 1, and particularly preferably p is 0. that is, a repeating unit having no substituent.

Next, the block having substantially no ion exchange group in the polyarylene type block copolymer of the present invention will be explained.

As described above, the block having substantially no ion exchange group has 0.1 or less ion exchange group based on the calculation per repeating unit, and it is particularly preferable that an ion exchange group per repeating unit is 0. that is, there is substantially no ion exchange group.

As the block having substantially no ion exchange group, the block containing the structural unit represented by said general formula (2) is preferable.

Herein, a, b and c in the general formula (2) each independently represents 0 or 1, n represents an integer of 5 or more, and is pref erably 5 to 200. When a value of n is small, problems tend to arise such that membrane forming properties and membrane strength are insufficient or durability is insufficient, thus, it is particularly preferable for n to be 10 or more. Further, for n to be 5 or more, preferably 10 or more, it is sufficient that a number-average molecular weight in terms of polystyrene for a block in the general formula (2) is 2000 or more, preferably 3000 or more.

Further, $Ar^2$, $Ar^3$, $Ar^4$ and $Ar^5$ in the general formula (2) each independently represent a divalent aromatic group. As the divalent aromatic group, the same group as exemplified in $Ar^1$ can be mentioned.

Moreover, $Ar^2$, $Ar^3$ and $Ar^4$ may be substituted by a fluorine atom, an alkyl group having 1-200 carbon atoms that may have a. substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent, and the same group as exemplified in said $Ar^1$ can be mentioned for them.

Y and Y' in said general formula (2) each independently represent an oxygen atom or a sulfur atom. Further,

X and X' in the general formula (2) each independently represent a direct bond or a divalent group, and above all, it is preferably a carbonyl group, a sulfonyl group, a 2,2-isopropylidene group, a 2,2-hexafluoroisopropylidene group or a 9,9-fluorenediyl group.

As preferable typical examples of the structural unit represented by said general formula (2), for example, the following can be mentioned. Additionally, n has the same definition as in said general formula (2):

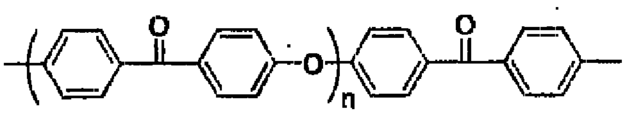

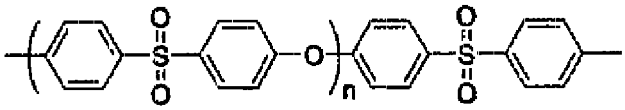

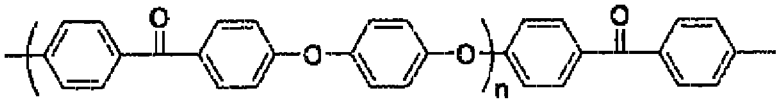

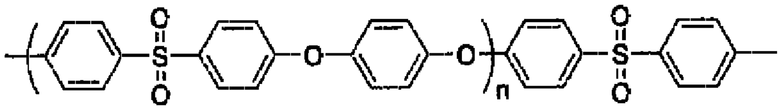

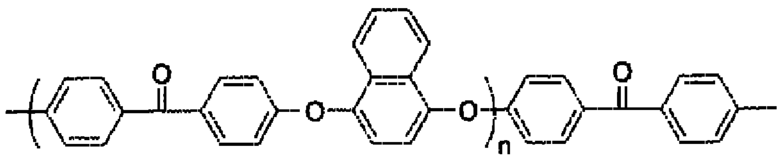

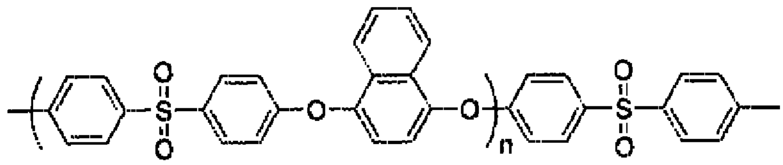

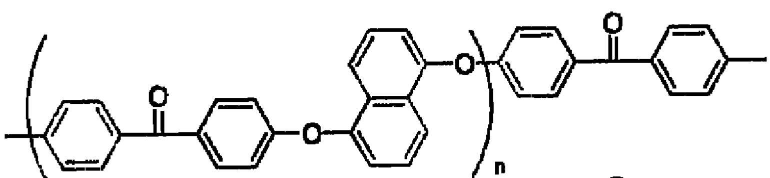

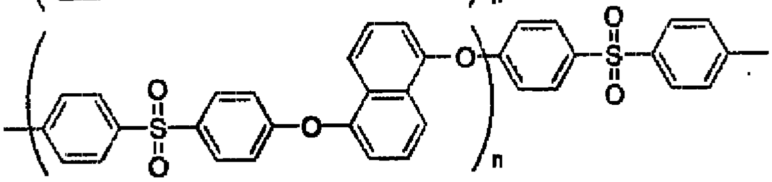

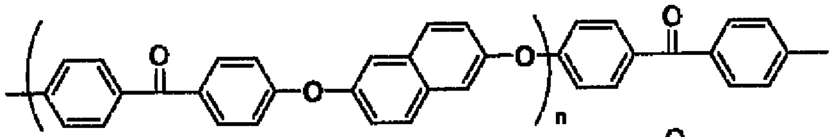

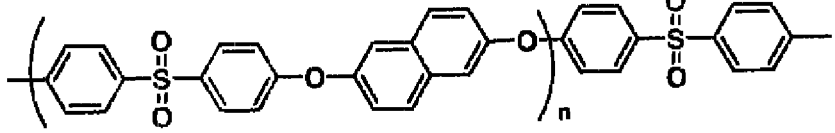

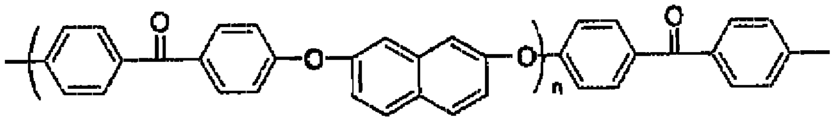

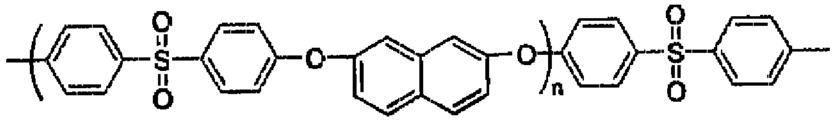

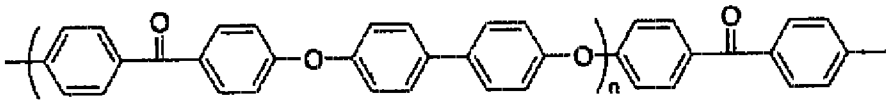

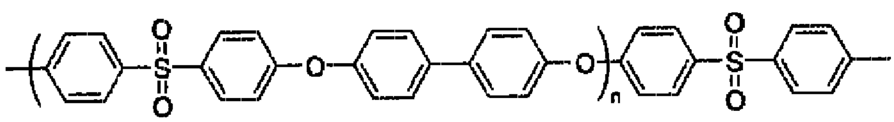

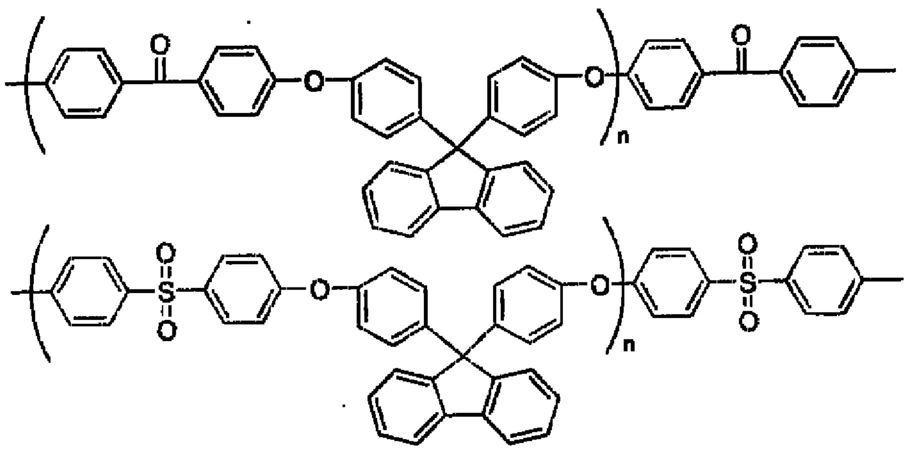

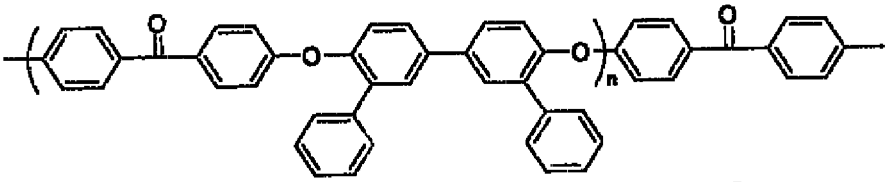

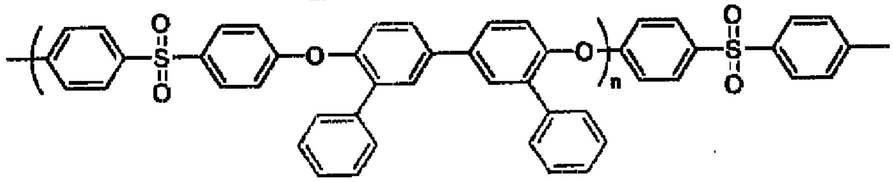

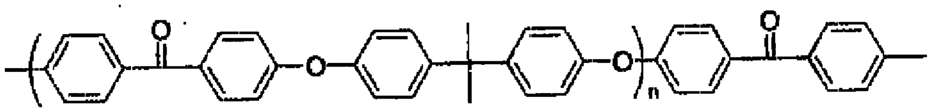

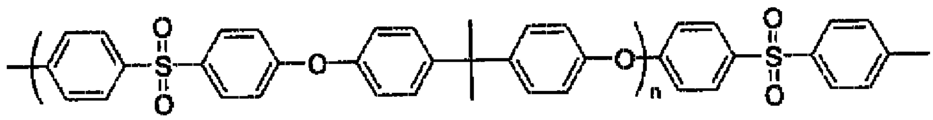

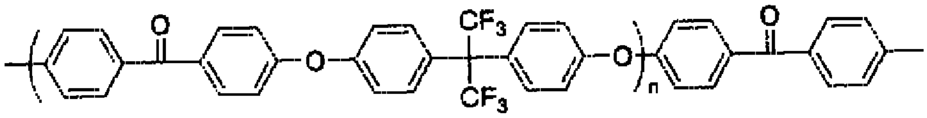

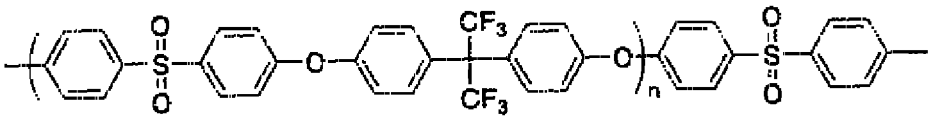

The introduction amount of the ion exchange group in the block having an ion exchange group of the polyarylene type block copolymer of the present invention is preferably 2.5 meq/g to 10.0 meq/g as expressed by the ion exchange capacity, further preferably 5.5 meq/g to 9.0 meq/g., and particularly preferably 5.5 meq/g to 7.0 meq/g.

When the ion exchange capacity showing the introduction amount of the ion exchange group is 2.5 meq/g or more, ion exchange groups themselves are closely adjacent, which is preferable because proton conductivity becomes higher when they are made into a polyarylene type block copolymer. On the other hand, when the ion exchange capacity showing the introduction amount of the ion exchange group is 10.0 meq/g or less, it is preferable because production is easy.

Further, the introduction amount of the ion exchange group of the whole polyarylene type block copolymer is preferably 0.5 meq/g to 4.0 meq/g as expressed by the ion exchange capacity, and further preferably 1.0 meq/g to 2.8 meq/g.

When the ion exchange capacity showing the introduction amount of the ion exchange group is 0.5 meq/g or more, it is preferable because proton conductivity becomes higher and functions as a polymer electrolyte for a fuel cell become better. On the other hand, when the ion exchange capacity showing the introduction amount of the ion exchange group is 4.0 meq/g or less, it is preferable because water resistance becomes better.

Further, the polyarylene type block copolymer of the present invention preferably has a molecular weight of 5000 to 1000000 in a number-average molecular weight in terms of polystyrene, above all, particularly preferably 15000 to 400000.

Next, the production method of a preferable polyarylene type block copolymer of the present invention will be explained.

A preferable block having an ion exchange group in the polyarylene type block copolymer is the block represented by said general formula (1), and an introduction method of an ion exchange group directly bonded to aromatic rings composing the main chain in $Ar^1$ may be a method for polymerizing monomers having ion exchange groups beforehand, or a method for introducing ion exchange groups in a block after the block is produced from monomers having no ion exchange group beforehand.

As a method for producing the polyarylene type block copolymer of the present invention using monomers having ion exchange groups, for example, under the coexistence of a zero-valent transition metal complex, it can be produced in a condensation reaction by polymerizing a monomer shown in the following general formula (7) and a precursor of the block having substantially no ion exchange group shown in the following general formula (6):

$$Q\text{-}Ar^1\text{-}Q \qquad (7)$$

wherein $Ar^1$ has the same definition as said general formula (1), Q represents a leaving group in a condensation reaction, and two Qs may be the same or different:

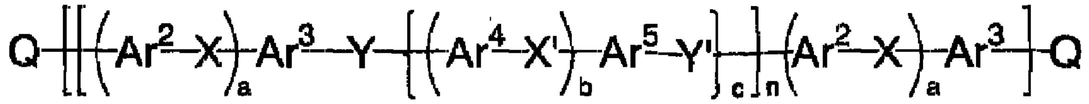

(6)

Wherein $Ar^2$, $Ar^3$, $Ar^4$, $Ar^5$, a, b, c, n, X, X', Y, Y', and Q have the same definitions as described above.

Monomers shown in said general formula (7), when exemplified in sulfonic acid groups as a preferable ion exchange group, include 2,4-dichlorobenzene sulfonic acid, 2,5-dichlorobenzene sulfonic acid, 3.5-dichlorobenzene sulfonic acid, 2,4-dibromobenzene sulfonic acid, 2,5-dibromobenzene sulfonic acid, 3,5-dibromobenzene sulfonic acid, 2,4-diiodobemzene sulfonic acid, 2,5-diiodobemzene sulfonic acid, 3,5-diiodobemzene sulfonic acid, 2,4-dichloro-5-methylbenzene sulfonic acid, 2.5-dichloro-4-methylbenzene sulfonic acid, 2,4-dibromo-5-methylbenzene sulfonic acid, 2,5-dibiromo-4-motbylbenzene sulfonic acid, 2,4-diiodo-5-methylbenzene sulfonic acid. 2,5-diiodo-4-methylbenzene sulfonic acid, 2,4-dichloro-5-methoxybenzene sulfonic acid, 2,5-dichloro-4-methoxybenzene sulfonic acid, 2,4-dibromo-5-methoxybenzene sulfonic acid, 2,5-dibromo-4-methoxybenzene sulfonic acid, 2,4-diiodo-5-methoxybenzene sulfonic acid, 2,5-diiodo-4-methoxybenzene sulfonic acid, 3,3'-dicrilarabipkxenyl-2,2'-disulfania acid, 3,3'-dibromobiphenyl-2,2'-disulfonic acid, 3,3'-diiadabiphenyl-2,2'-disulfanic acid, 4,4'-dichlorobiphanyl-2,2'-disulfonic acid, 4,4'-dibromobiphenyl-2,2'-disulfoni.c acid, 4,4'-diiodoblphenyl-2,2'-disulfonic acid, 4,4'-dichlorobiphenyl-3,3'-disulfonic acid, 4.4'-dibromobiphenyl-3,3'-disulfonic acid, 4,4'-diiodobiphenyl-3,3'-disulfonic acid, 5,5'-dichlorabiphenyl-2,2'-disulfontc acid, 5,5'-dibromobiphenyl-2,2'-disulfonic acid, and 5,5'-diiodobiphenyl-2,2'-diaulfonic acid.

Moreover, in the case of other ion exchange groups, a sulfonic acid group of the monomer exemplified above is replaced by an ion exchange group such as a carboxylic acid group or a phosphonic acid group and can be chosen, and monomers with these other ion exchange groups can be available easily from the market or can be produced by using the known production method.

Further, the ion exchange group of the monomer exemplified above may be in a salt form, in particular, using the monomer whose ion exchange group is in a salt form is preferable from the viewpoint of polymerization reactivity. As the salt form, an alkali metal salt is preferable, in particular. Li salt, Na salt, and K salt forms are preferable.

Q shown in said general formula (6) and general formula (7) represents a leaving group in a condensation reaction, and as specific examples, for example, there can be mentioned halogen atoms such as chlorine atom, bromine atom, iodine atom; a p-toluenesulfonyloxy group, a methanesulfonyloxy group, and a trifluoromethanesulfonyloxy group. Further, as a method for producing the polyarylene type block copolymer of the present invention by introducing an ion exchange group after polymerization, for example, under the coexistence of a zero-valent transition metal complex, it can be produced in a condensation reaction by polymerizing a compound shown in the following general formula (8) and a precursor of the block having substantially no ion exchange group shown in said general formula (6), thereafter, by introducing an ion exchange group in accordance with the known method:

$$Q\text{-}Ar^6\text{-}Q \qquad (8)$$

wherein $Ar^6$ represents a divalent aromatic group capable of becoming the $Ar^1$ in said general formula (1) by introducing an ion exchange group, Q has the same definition as in said general formula (7).

Herein, $Ar^6$ may be substituted by a fluorine atom, an alkyl group having 1-20 carbon atoms, an alkoxy group having 1-20 carbon atoms, an aryl group having 6-20 carbon atoms, an aryloxy group having 6-20 carbon atoms, or an acyl group having 2-20 carbon atoms, $Ar^6$ is a divalent aromatic group having a structure capable of introducing at least one ion exchange group. As the divalent aromatic group, for example, there can be mentioned divalent monocyclic aromatic groups such as 1,3-phenylene group and 1,4-phenylene group; divalent condensed aromatic groups such as 1,3-naphthalenediyl group, 1,4-naphthalenediyl group, 1,5-naphthalenediyl group. 1,6-naphthalenediyl group, 1,7-naphthalenediyl group, 2,6-naphthalenediyl group, and 2,7-naphthalenediyl group; and heterocyclic groups such as pyridinediyl group, quinoxalinediyl group and thiophenediyl group. As an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent, there can be mentioned the same groups as the substituent exemplified in said $Ar^1$.

As a structure capable of introducing an ion exchange group in $Ar^6$, it is shown to have a hydrogen atom directly bonded to an aromatic ring, or to have a substituent capable of being converted to an ion exchange group. As the substituent capable of being converted to an ion exchange group, it is not particularly limited as long as it does not disturb the polymerization reaction, for example, there can be mentioned a mercapto group, a methyl group, a formyl group, a hydroxyl group and a bromo group.

As an introduction method of an ion exchange group, when taking an introduction method of a sulfonic acid group for example, there can be mentioned a method for converting a hydrogen atom into a sulfonic acid group, wherein a polyarylene type block copolymer obtained by polymerization is dissolved or dispersed in concentrated sulfuric acid, or dissolved in an organic solvent at least partially, followed by acting with concentrated sulfuric acid, chlorosulfuric acid, fuming sulfuric acid or sulfur trioxide. Typical examples of these monomers include, for example, 1,3-dichlorobenzene, 1,4-dichlorobenzene, 1,3-dibromobenzene, 1,4-dibromobenzene, 1,3-diiodobenzene, 1,4-diiodobenzene, 1,3-dichloro-4-mathaxybenzene, 1.4-dichloro-3-methoxybenzene, 1,3-dibromo-4-methoxybenzene, 1,4-dibromo-3"methoxybenzene. 1,3-diiodo-4-methoxybenzene, 1,4-diiodo-3-methoxybenzene, 1,3-dichloro-4-acetoxybenzene, 1,4-dichloro-3-acetoxybenzene, 1,3-dibromo-4-acetoxybenzene, 1,4-dibromo-3-acetoxybenzene, 1,3-diiodo-4-acetozybenzone, 1,4-diiodo-3-acetoxybenzene, 4,4'-dichlorobiphenyl, 4,4'-dibromobiphenyl, 4,4'-diiodobiphenyl, 4,4'-dichloro-3,3'-dimetliylbiphenyl, 4,4'-dibromo-3,3'-dimethylbiphenyl, 4,4'-diiodo-3,3'-dimethylbiphenyl. 4,4'-dichloro-3,3'-dimethoxybiphenyl, 4,4'-dibromo-3,3'-dimethoxybiphenyl, and 4,4'-diiodo-3,3'-dimethoxybiphenyl.

Further, when a monomer shown in said general formula (10) has a mercapto group, it is possible to obtain a block having a mercapto group after polymerization reaction, and to convert the mercapto group into a sulfonic acid group by oxidation reaction. As typical examples of such monomer, there can be mentioned 2,4-dichlorobenzenethiol, 2,5-dichlorobenzenethiol, 3.5-dichlorobenzenethiol, 2,4-dibromobenzenethiol, 2,5-dibrombenzenethiol, 3,5-dibromobenaenethiol, 2,4-diiodobenzenethiol, 2,5-diiodobenzenethiol, 3,5-diiodobenzenethiol, 2,5-dichloro-1,4-benzenedithiol, 3,5-dichloro-1,2-benzenedithiol, 3.6-dichloro-1,2-benzenedithiol, 4,6-dichloro-1,3-benzenedithiol, 2,5-dibromo-1,4-benzenedithiol, 3,5-dibromo-1,2-benzenedithiol, 3,6-dibromo-1,2-benzenedithiol, 4,6-dibromo-1,3-benzenedithiol, 2,5-diiodo-1,4-benzenedithiol, 3,5-diiodo-1,2-benzenedithiol, 3,6-diiodo-1,2-benzenedithiol, and 4,6-diiodo-1,3-benzenedithiol, and further a monomer exemplified above whose mercapto group is protected.

Next, as an introduction method of a carboxylic acid group, for example, there can be mentioned known methods such as a method of converting a methyl group or formyl group into a carboxylic acid group by an oxidation reaction, and a method that a bromo group is converted to -MgBr by the action of Mg, then converted to a carboxylic acid group by the action of carbon dioxide. Herein, typical examples of the monomer having a methyl group include 2,4-dichlorotoluene, 2,5-dichlorotoluene, 3,5-dichlorotoluene, 2,4-dibromotoluene, 2,5-dibromotoluene, 3,5-dibromotoluene, 2,4-diiodotoluene, 2,5-diiadotoluene, and 3,5-diiodotoluene.

As an introduction method of a phosphonic acid group, for example, there can be mentioned known methods such as a method that a bromo group is converted to a diethyl phosphonate group by the action of trialkyl phosphite under the coexistence of a nickel compound such as nickel chloride, followed by hydrolysis into a phosphonic acid group; a method that a C-P bond is formed under the coexistence of a Lewis acid catalyst using phosphorous trichloride or phosphorous pentachloride, followed by oxidation or hydrolysis according to need into a phosphonic acid group; and a method of converting a hydrogen atom into a phosphonic acid group by the action of anhydrous phosphoric acid at high temperature.

As an introduction method of a sulfonimide group, for example, there are known methods such as a method of converting the foregoing sulfonic acid group into a sulfonimide group by condensation reaction or substitution reaction.

Herein, Q is a leaving group in a condensation reaction, and the same as exemplified in said general formula (6) and general formula (7).

Further, as preferable typical examples of the precursor represented by said general formula (6), monomers exemplified below can be mentioned. In these exemplifications, Q has the same definition as described above.

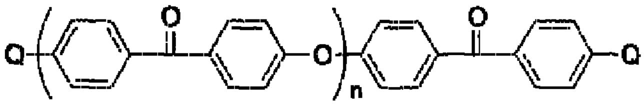

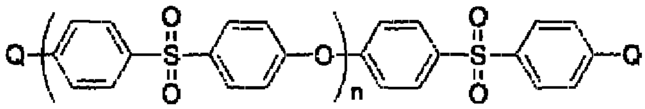

(6a)

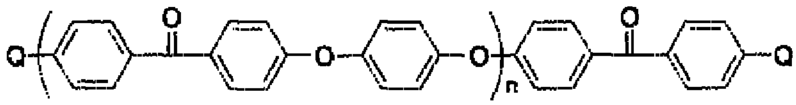

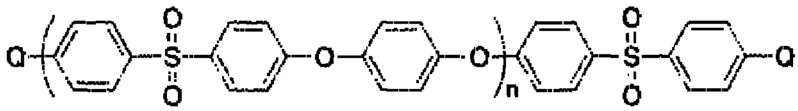

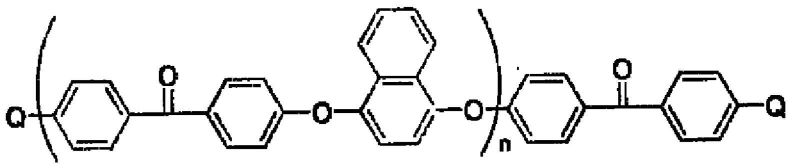

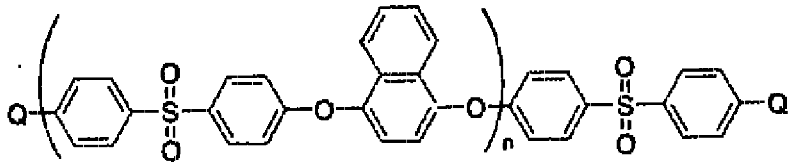

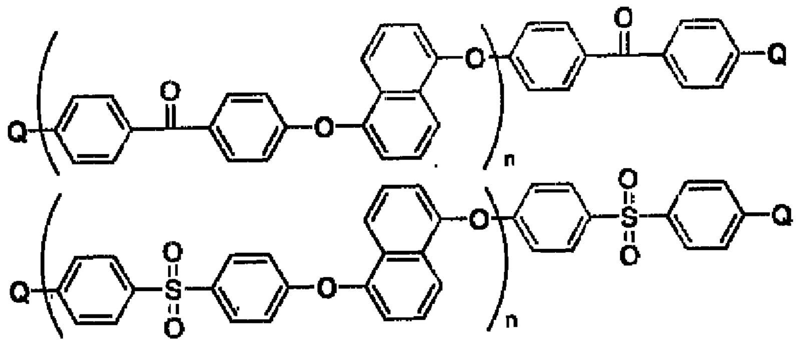

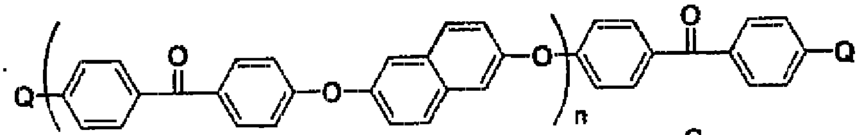

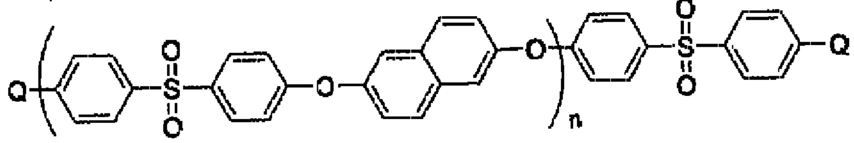

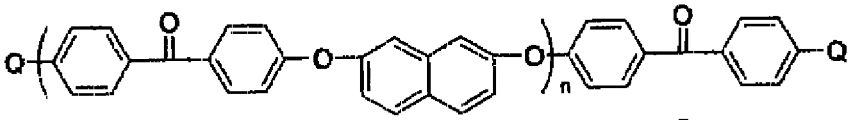

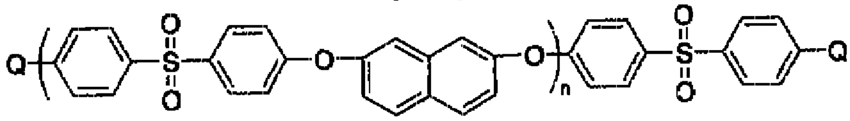

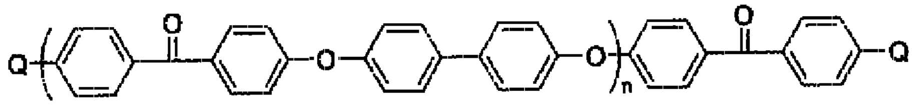

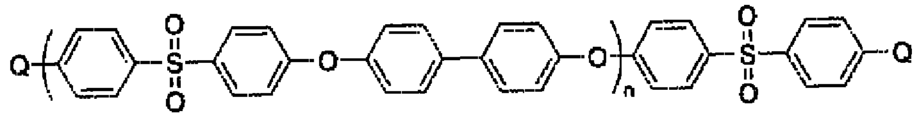

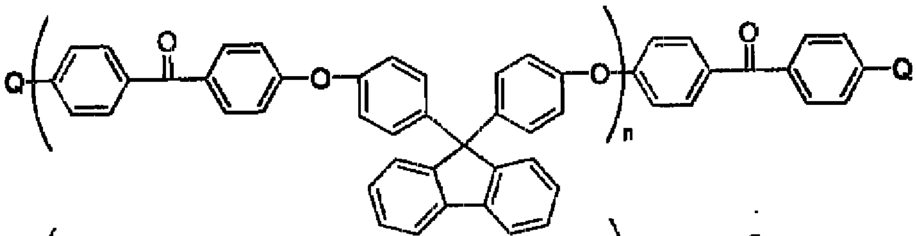

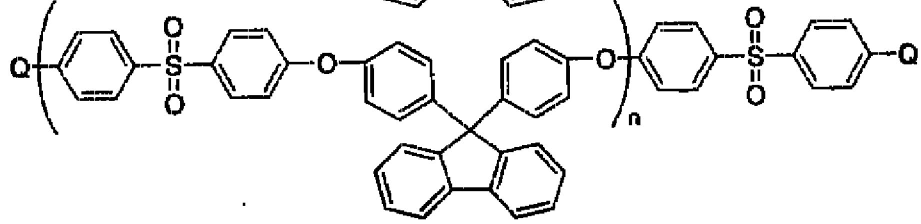

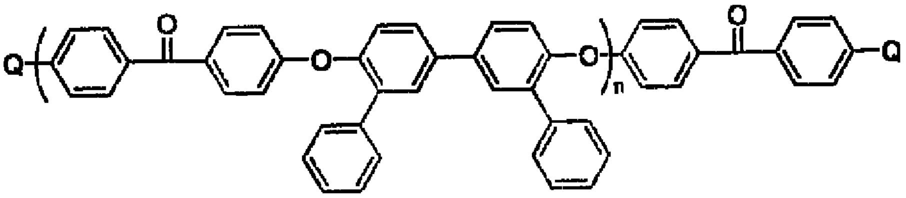

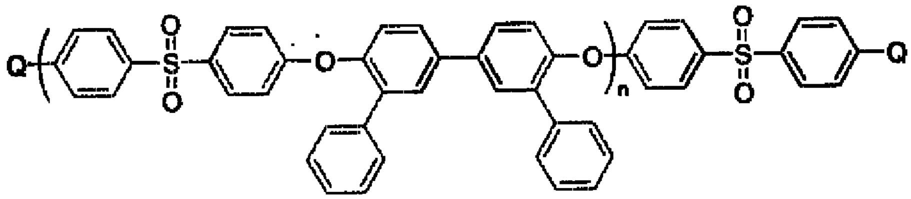

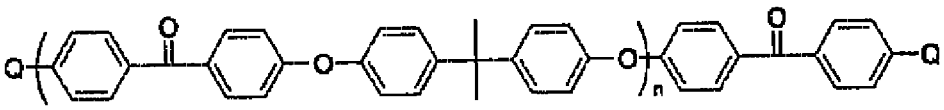

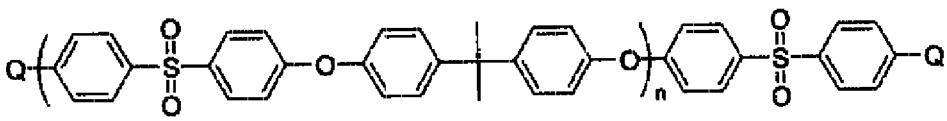

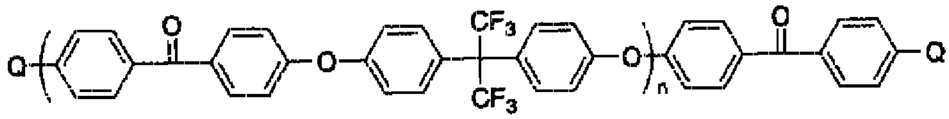

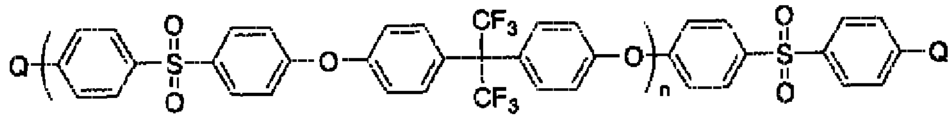

Such exemplified compounds can be easily available from the market, or can be produced using raw materials easily available from the market, for example, polyethersulfone with a leaving group Q at terminals shown in the above-described (6a) can be a commercially available products such as Sumika Excell PES manufactured by Sumitomo Chemical Co., Ltd., which can also be used as a precursor shown in the formula (6). Additionally, n has the same definition as described above, and those compounds with a number-average molecular weight in terms of polystyrene of not less than 2000, preferably not less than 3000 are chosen.

Polymerization by condensation reaction is conducted under the coexistence of a transition metal complex, for example.

The above-described transition metal complex is one in which halogen or a ligand described later is coordinated with a transition metal, and preferably has at least one ligand described later. As the transition metal complex, either a commercial product or one synthesized separately may be used.

As the synthesis method of the transition metal complex, for example, there can be mentioned the known methods such as a method for reacting a transition metal salt or transition metal oxide with a ligand. The synthesized transition metal complex may be used by bringing it out or in situ without bringing it out.

As the ligand, for example, there can be mentioned acetate, acetylacetonato, 2,2'-bipyridyl, 1,10-phenanthroline,

methylenebisoxazoline, N,N,N',N'-tetramethylethylenediamine, triphenylphosphine, tritolylphosphine, tributylphosphine, triphenoxyphosphine, 1,2-bisdiphenylphosphinoethane, and 1,3-bisdiphenylphosphinopropane.

As the transition metal complex, for example, there can be mentioned a nickel complex, palladium complex, platinum complex, and copper complex. Among these transition metal complexes, zero-valent transition metal complexes such as a zero-valent nickel complex and a zero-valent palladium complex are preferably used, and a zero-valent nickel complex is more preferably used.

As the zero-valent nickel complex, there can be mentioned, for example, bis(1,5-cyclooctadiene) nickel (0), (ethylene)bis(triphenylphosphine) nickel (0), and tetrakis(triphenylphosphine) nickel, among them, bis(1,5-cyclooctadiene) nickel (0) is preferably used from the viewpoint of being cheap.

As the zero-valent palladium complex, for example, tetrakis(triphenylphosphine) palladium (0) can be mentioned.

As these zero-valent transition metal complexes, one synthesized as described above may be used, or one available as a commercial product may be used.

As the synthesis method of the zero-valent transition metal complex, there are known methods such as a method for converting a transition metal compound into a zero-valent one with a reducing agent such as zinc and magnesium. The synthesized zero-valent transition metal complex may be used by bringing it out or in situ without bringing it out.

In the case where a zero-valent transition metal complex is generated from a transition metal compound by a reducing agent, as the transition metal compound used, generally, a divalent transition metal compound is used, but a zero-valent one can also be used. Above all, a divalent nickel compound and a divalent palladium compound are preferable. As the divalent nickel compound, there can be mentioned nickel chloride, nickel bromide, nickel iodide, nickel acetate, nickel acetylacetonato, nickel chloride bis(triphenylphosphine), nickel bromide bis(triphenylphosphine), and nickel iodide bis(triphenylphosphine), and as a divalent palladium compound, there can be mentioned palladium chloride, palladium bromide, palladium iodide, and palladium acetate.

The reducing agent includes zinc, magnesium, sodium hydride, hydrazine and a derivative thereof, and lithium aluminum hydride. According to need, ammonium iodide, trimethylammonium iodide, triethylammonium iodide, lithium iodide, sodium iodide or potassium iodide can be used in combination.

In a condensation reaction using the transition metal complex, it is preferable to add a compound capable of becoming a ligand of the transition metal complex used from the viewpoint of yield improvement of the polymer. The compound to be added may be the same as or different from the ligand of the transition metal complex used.

As the examples of the compound capable of becoming a ligand, above-described compounds exemplified as a ligand can be mentioned, and triphenylphosphine and 2,2'-bipyridyl are preferable from the viewpoints of versatility, inexpensive price, reactivity of condensation agent, yield of polymer, and higher degree of polymerization of polymer. In particular, 2,2'-bipyridyl in combination with bis(1,5-cyclooctadiene) nickel (0) can achieve the yield improvement of the polymer and higher degree of polymerization of the polymer, thus, this combination is preferably used. The amount of ligand added relative to a zero-valent transition metal complex is generally about 0.2 to 10 times in mole on the basis of a transition metal atom, and about 1 to 5 times in mole is preferably used.

The amount of the zero-valent transition metal complex used is 0.1 times or more in mole relative to the total mole amount of a compound shown in said general formula (7) and/or a compound shown in said general formula (8), and a precursor shown in said general formula (6). When the amount used is too small, the molecular weight tends to be smaller, it is preferably 1.5 times or more in mole, more preferably 1.8 times or more in mole, and further preferably 2.1 times or more in mole. The upper limit of the amount used is not particularly limited, but when the amount used is too large, the post treatment tends to be troublesome, hence, it is preferably 5.0 times or less in mole.

Additionally, in the case where a zero-valent transition metal complex is synthesized from a transition metal compound using a reducing agent, it may be set for the zero-valent transition metal complex produced to be the above-described range, for example, the amount of a transition metal compound may be set to 0.01 times or more in mole, preferably 0.03 times or more in mole relative to the total mole amount of a compound shown in said general formula (7) and/or a compound shown in said general formula (8), and a precursor shown in said general formula (6). The upper limit of the amount used is not limited, but when the amount used is too large, the post treatment tends to be troublesome, hence, it is preferably 5.0 times or less in mole. Further, the amount of reducing agent is 0,5 times or more in mole for example, preferably 1.0 times or more in mole relative to the total mole amount of a compound shown in said general formula (7) and/or a compound shown in said general formula (8), and a precursor shown in said general formula (6). The upper limit of the amount used is not limited, but when the amount used is too large, the post treatment tends to be troublesome, hence, it is preferably 10 times or less in mole.

Further, the reaction temperature is ordinarily in a range of 0 to 250ºC, however, to increase a molecular weight of the polymer to be produced, it is preferable to mix a zero-valent transition metal complex at a temperature of 45ºC or higher with a compound shown in said general formula (7) and/or a compound shown in said general formula (8), and a precursor shown in said general formula (6). The preferable mixing temperature is ordinarily about 45ºC to 200ºC,

particularly preferably about 50ºC to 100ºC. After mixing of a zero-valent transition metal complex, a compound shown in said general formula (7) and/or a compound shown in said general formula (8), and a precursor shown in said general formula (6), the mixture is subjected to a reaction ordinarily at about 45ºC to 200ºC, preferably at about 50ºC to 100ºC. The reaction time is ordinarily about 0.5 to 24 hours.

Further, regarding a mixing method of a zero-valent transition metal complex, a compound shown in said general formula (7) and/or a compound shown in said general formula (8), and a precursor shown in said general formula (6), it may be a method in which one is added to the other or may be a method in which both of them are simultaneously put into a reaction container. Upon adding, it may be added at once, however, it is preferable to be added little by little in consideration of heat generation, and it is also preferable to be added under the coexistence of a solvent.

These condensation reactions are generally conducted under the coexistence of a solvent. As such solvent, for example, there are exemplified aprotic solvents such as N,N-dimethyformamide (DMF), N,N-dimethylacetamide (DMAc), N-methylpyrrolidone (NMP), dimethylsulfoxide (DMSO) and hexamethylphosphorictriamide; aromatic hydrocarbon solvents such as toluene, xylene, mesitylene, benzene and n-butylbenzene; ether solvents such as tetrahydrofuran, 1,4-dioxane, dibutyl ether, tert-butyl methyl ether, dimercaptoethane and diphenyl ether; ester solvents such as ethyl acetate, butyl acetate and methyl benzoate; and halogenated alkyl solvents such as chloroform and dichloroethane. Additionally, expression in a parenthesis is an abbreviation of a solvent, and this abbreviation is sometimes used in the following description.

To further increase a molecular weight of a polymer to be produced, a polymer is preferably solved sufficiently, thus, good solvents to a polymer are preferable such as tetrahydrofuran, 1,4-dioxane, DMF, DMAc, NMP, DMSO and toluene. These can be used in a mixture of two or more thereof. Above all. DMF, DMAc, NMP, DMSO or a mixture of two or more thereof is preferably used.

The amount of the solvent is not particularly limited, however, when the concentration is too low, collection of a polymer compound produced tends to be difficult, whereas when the concentration is too high, stirring sometimes becomes difficult, hence, the amount of the solvent to be used is preferably 99.9 to 50% by weight, more preferably 99.9 to 75% by weight when the total amount of the solvent, a compound shown in said general formula (7) and/or a compound shown in said general formula (8), and a precursor shown in said general formula (6) is regarded as 100% by weight.

In this way, the polyarylene type block copolymer of the present: invention is obtained, and an ordinary method can be adopted for the bringing-out of the polyarylene type block copolymer from the reaction mixture. For example, a poor solvent is added to precipitate a polymer and a target material can be brought out by filtration or the like. Moreover, according to need, it can be purified by the ordinary purification method through further washing, reprecipitation with a good solvent and a poor solvent, or the like.

Further, in the case where a sulfonic acid group of the polyarylene type block copolymer produced is in a salt form, in order to use it as a member for a fuel cell, the sulfonic acid group is preferably to be converted to a free acid form, and conversion to a free acid form is possible generally by washing with an acid solution. As the acid used, for example, hydrochloric acid, sulfuric acid and nitric acid can be mentioned, and hydrochloric acid is preferred.

When typical examples of the polyarylene type block copolymer of the present invention are exemplified by a block having a preferable ion exchange group shown in said general formula (3), the following structures can be mentioned:

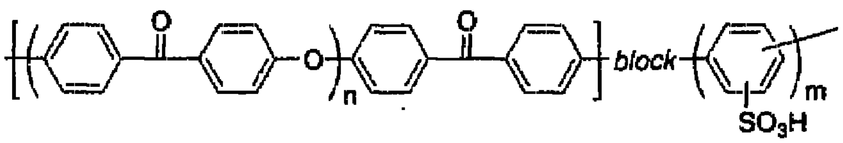

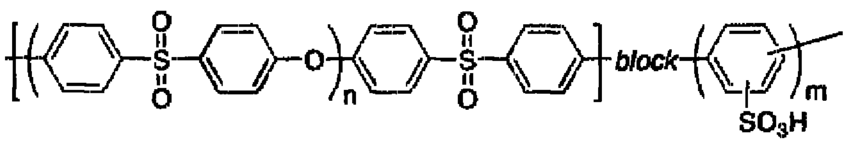

.

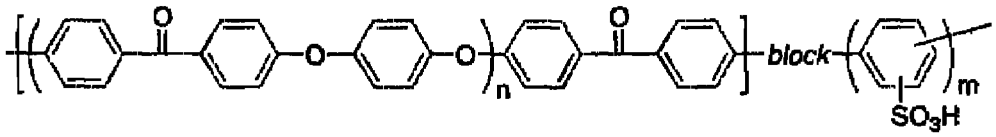

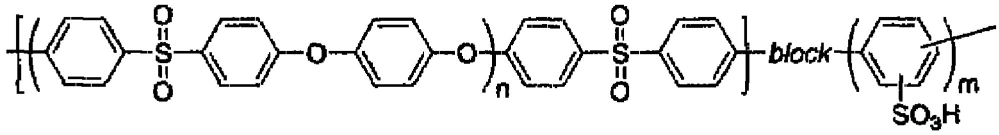

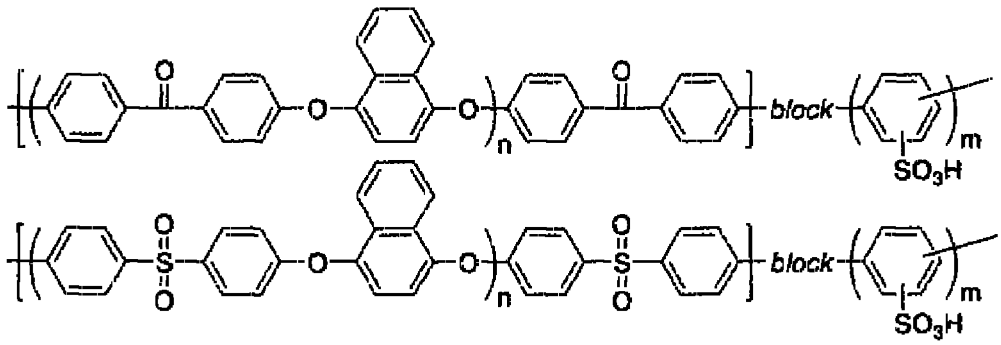

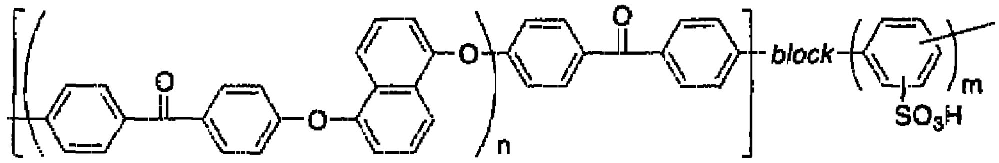

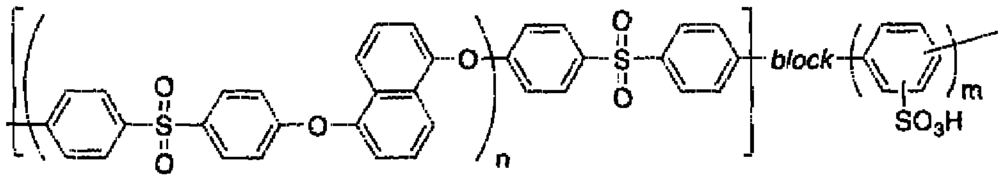

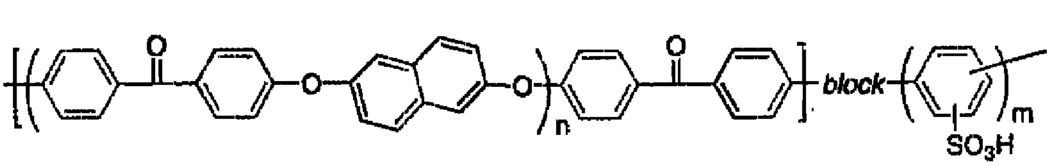

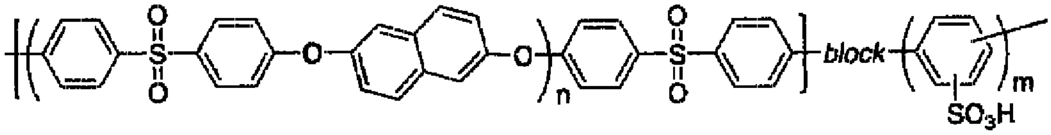

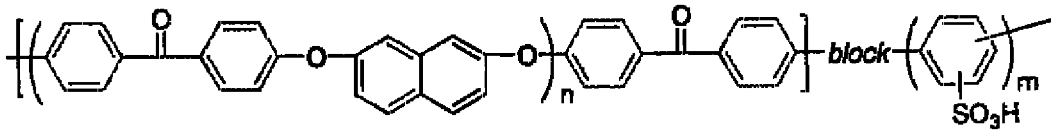

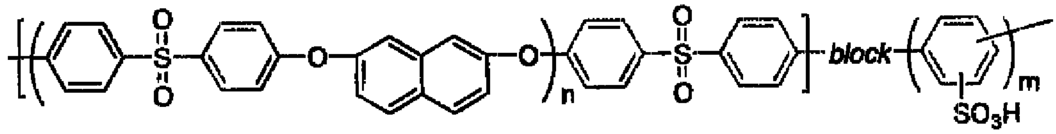

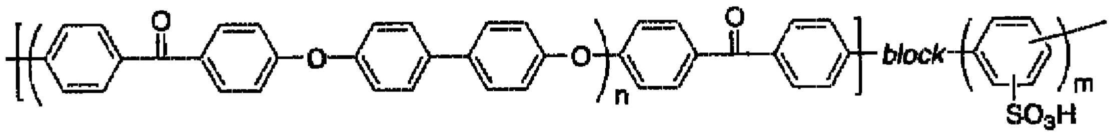

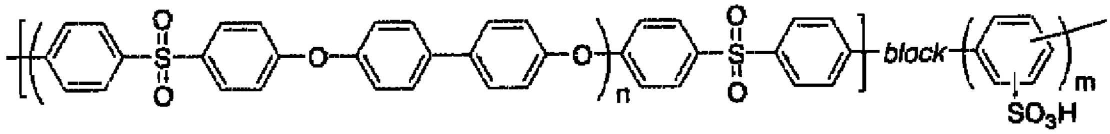

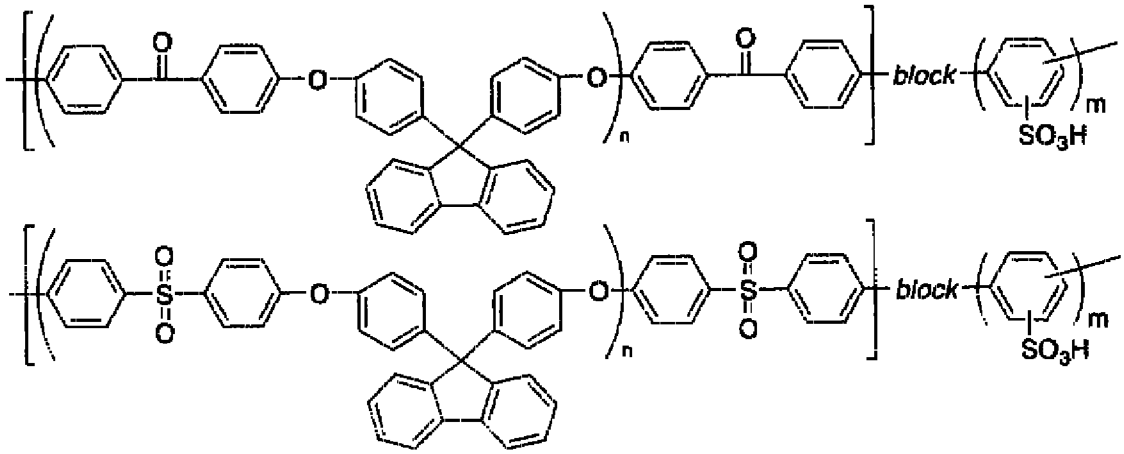

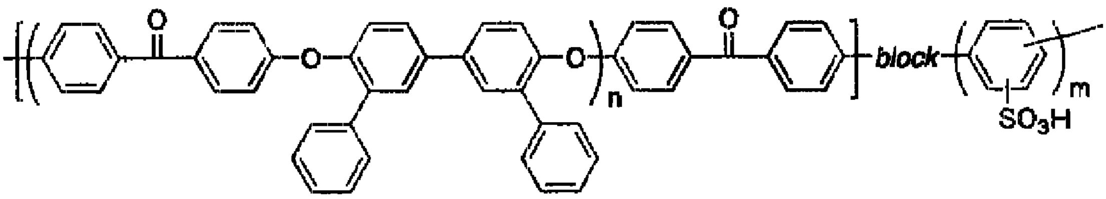

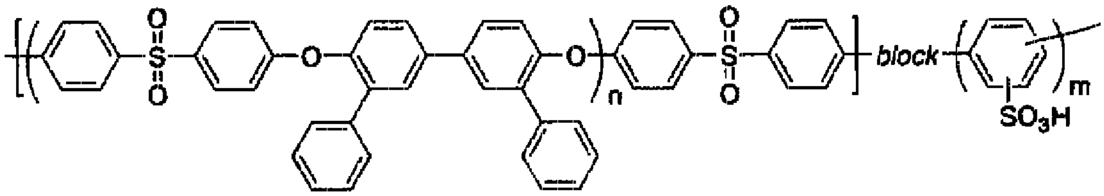

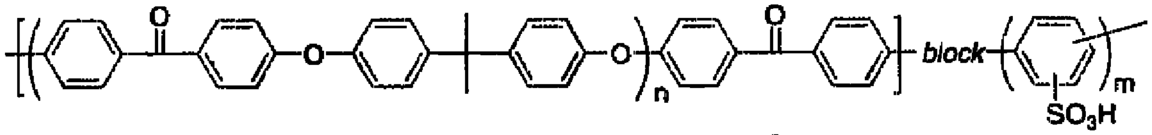

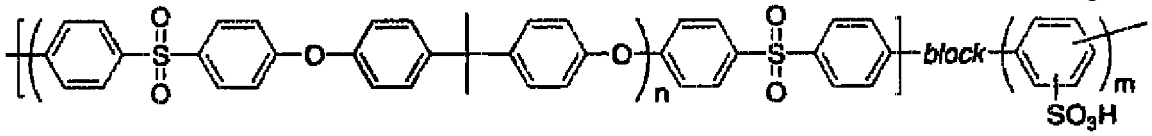

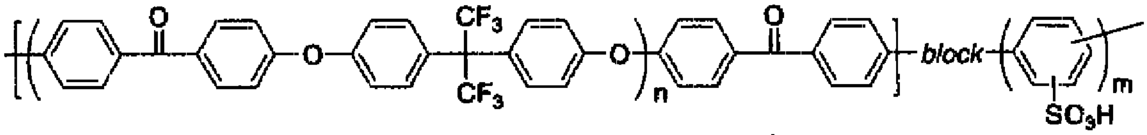

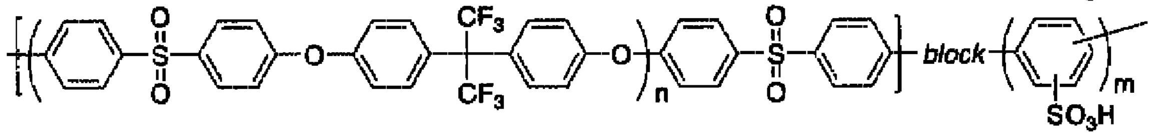

Further, as a preferred embodiment of the polyarylene type block copolymer of the present invention, when the block having the ion exchange group is a block having a structural unit shown in the following general formula (4), it is preferable because the block shown in said general formula (3) can be efficiently produced:

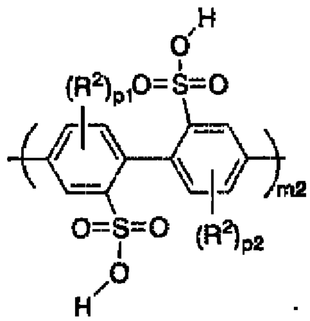

(4)

wherein $R^2$s are same or different, $R^2$ represents a substituent selected from a fluorine atom, an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent; m2 is an integer of 3 or more, p1 and p2 each are an integer of 0 or more but not more than 3.

Regarding a polyarylene type block copolymer comprising a structural unit represented by said general formula (4) as a block having an ion exchange group, further a structural unit represented by said general formula (2) or general formula (2a) as a block having substantially no ion exchange group, as described above, in addition to that humidity dependence of proton conductivity is small and dimensional stability upon water uptake is small, a high molecular weight product is easily obtained as described later, which provides a preferable polymer electrolyte as a member of a fuel cell.

Further, as a preferred embodiment of the polyarylene type block copolymer of the present invention, it is preferable that the block having an ion exchange group has a structure represented by said general formula (3), and in the structure, when it is represented by the three connection modes of (3a), (3b) and (3c) defined below and the constituent ratio of the connection modes is denoted as a TP value shown in the following equation (I), the TP value is 0.6 or less.

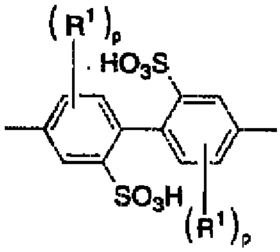

(3a)

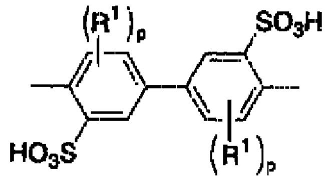

(3b)

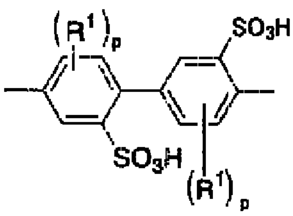

or

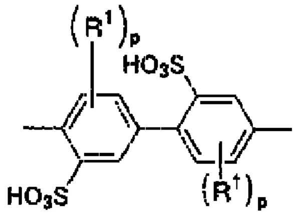

(3c)

wherein $R^1$ and p have the same definitions as in said general formula (3);

$$\text{TP value} = n_c / (n_a+n_b+n_c) \qquad (I)$$

wherein $n_a$ is the number of connection modes shown in the above-described (3a), $n_b$ is the number of connection modes shown in the above-described (3b), and $n_c$ is the number of connection modes shown in the above-described (3c).

Each of the ratios in the connection modes can be obtained by a $^1$H-NMR, for example.

Herein, as a specific example for obtaining said TP value, a description will be made with reference to the following general formulas (3U), (3V), (3X) and (3Y) as an example in which a degree of polymerization m is 6 and p of 0. In this way, when m is 6 and all phenylene groups forming a polyarylene structure form the main chain with a 1,4-bond, the total number of connection constitutions is m - 1, namely, is 5.

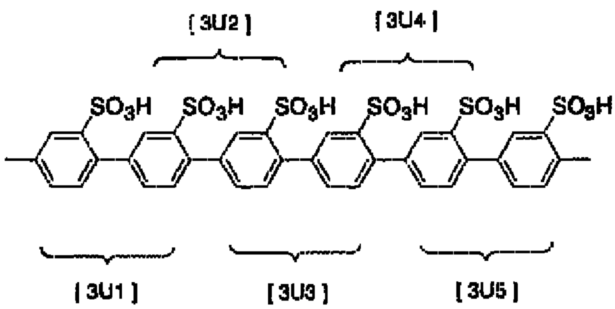

(3U)

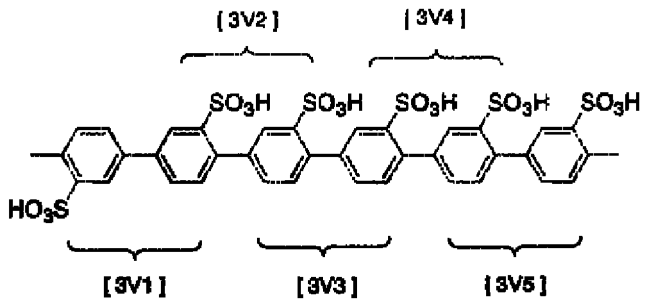

(3V)

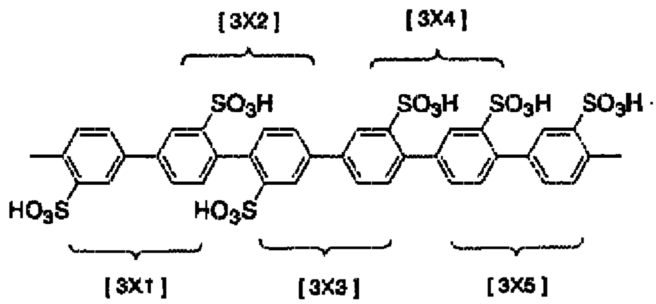

(3X)

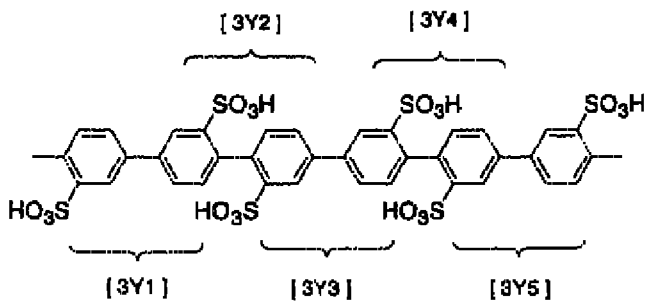

(3Y)

In said general formula (3U), since the connection modes [3U1], [3U2], [3U3], [3U4] and [3U5] are each the connection mode shown in said general formula (3c), na = 0, nb =0 and nc =5, thus the TP value is 1. Further, in said general formula (3V), the connection modes [3V2], [3V3], [3V4] and [3V5] are the connection mode shown in said general formula (3c), however, the connection mode [3V1] is the connection mode shown in said general formula (3b), and na = 0, nb = 1 and nc = 4, thus the TP value is 0.8. Further, in said general formula (3X), the connection modes [3X4] and [3X5] are the connection mode shown in said general formula (3c), however, the connection modes [3X1] and [3X3] are the connection mode shown in said general formula (3b), and the connection mode [3X2] is the connection mode shown in said general formula (3a), namely, na = 1, nb = 2 and nc = 2, thus the TP value is 0.4. Lastly, in said general formula (3Y), since the connection modes [3Y1], [3Y3] and [3U5] are each the connection mode shown in said general formula (3b), and the connection modes [3Y2] and [3Y4] are the connection mode shown in said general formula (3a), na = 2, nb =3 and nc = 0, thus the TP value is 0.

Namely, among them, the block having a preferable ion exchange group is said general formulas (3X) and (3Y).

Herein, said TP value is more preferably 0.5 or less, particularly preferably 0.4 or less.

As a method for production of a polyarylene type block copolymer containing a block having an ion exchange group of a preferable TP value as described above, it can be achieved by copolymerizing a compound represented by the following general formula (5) and a compound represented by said general formula (6):

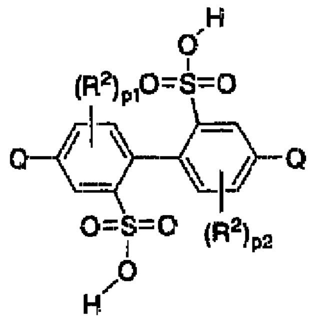

(5)

wherein $R^2$, p1 and p2 have the same definitions as in said general formula (4), Q represents a leaving group.

The compound represented by said general formula (5) can be easily made into a high molecular weight polymer by a polymerization method described later, and by making a block having a sulfonic acid group into a high molecular weight polymer in this manner, it is possible to easily obtain a polyarylene type block copolymer having practical ion exchange capacity.

Further, $R^2$ is a substituent on a benzene nucleus, and it is preferably a group not disturbing polymerization by a condensation reaction described later, for which the same group as exemplified as the substituent of said $Ar^1$ can be mentioned.

As typical examples of the compound represented by the general formula (5), among the compounds exemplified in said general formula (7), there can be mentioned 4,4'-dichlorabipheny3.-2,2'-disulfonic acid, 4,4'-dibroinabiphenyl-. 2,2'-distilfonic acid, 4,4'-diiodobiphenyl-2,2'-disulfonic acid, 4.4'-dichloro-3,3'-dimethylbipbenyl-2,2'-disulfonic acid, 4,4'-dibromo-3,3'-dimethylbiphenyl-2,2'-disulfonic acid, 4,4'-diiodo-3,3'-dimethylbiphenyl-2,2'-disulfonic acid, 4,4'-dichloro-3,3'-dimethoxylbiphenyl-2,2'-disulfonic acid, 4,4'-dibromo-3,3'-dimethoxylbiphenyl-2,2'-disulfonic acid, and 4,4'-diiodo-3,3'-dimethoxylbiphenyl-2,2'-disulfonic acid, and further, the ion exchange group of the compounds exemplified above may be in a salt form, in particular, using a compound of an ion exchange group in a salt form is preferable from the viewpoint of polymerization reactivity. As the salt form, an alkali metal salt is preferable, in particular, Li salt, Na salt and K salt forms are preferable.

As described above, the compound represented by the general formula (5) may have a substituent on the benzene nucleus, and the number of substituents, p1 and p2 are preferably 0 or 1, more preferably the number of substituents is 0, that is, being without a substituent $R^2$.

In condensation of a compound shown in said general formula (5) and a compound shown in said general formula (6), regarding a solvent, amount of solvent, reaction temperature and reaction time described in the condensation reaction conditions, the equivalent conditions can be exemplified by substituting "a compound represented by the general formula (5)" for "a compound represented by the general formula (7) and/or a compound represented by the general formula (8)", and above all, as a catalyst used in the condensation reaction for the compound represented by the general formula (5), a nickel complex is preferable, and as the nickel complex, for example, there are exemplified zero-valent nickel complexes such as bis(cyclooctadiene) nickel (0), (ethylene)bis(triphenylphosphine) nickel (0), and tetrakis(triphanylphosphine) nickel (0); divalent nickel complexes such as nickel fluoride, nickel chloride, nickel bromide, nickel iodide, nickel formate, nickel acetate, nickel sulfate, nickel carbonate, nickel nitrate, nickel acetylacetonato, and nickel chloride (dimethoxyethane), preferably, bis(cyclooctadienen) nickel (0) and nickel chloride are exemplified. In particular, a divalent nickel complex in the coexistence of zinc as a reducing agent is preferable.

It is preferable that a nickel complex coexists further with a neutral ligand, and as the ligand, for example, nitrogen-containing ligands such as 2,2'-bipyridyl, 1,10-phenanthroline, methylenebisoxazoline and N,N,N',N'-tetratliethylethylenediamine can be exemplified, and 2,2'-bipyridyl is particularly preferable.

The amount of the nickel complex used is generally about 1 to 5 times in mole relative to the total of a compound shown in said general formula (5) and a precursor shown in the general formula (6), and about 1.5 to 3.5 times in mole is preferably used. Further, when a ligand is used, it is generally about 0.2 to 2 times in mole, preferably about 1 to 1.5 times in mole relative to a nickel complex.

By the production method, a polyarylene type copolymer having a block represented by said general formula (4) can be produced, and in the case where a sulfonic acid group of the polyarylene type block copolymer obtained by the production method is in a salt form, in order to use it as a member for a fuel cell, the sulfonic acid group is preferably converted to a free acid form, and the conversion to a free acid form is possible generally by washing with an acid solution. As the acid used, for example, hydrochloric acid, sulfuric acid and nitric acid can be mentioned, and hydrochloric acid is preferred.

The introduction amount of the ion exchange group in the block having an ion exchange group of the polyarylene type block copolymer obtained in this way is preferably 2.5 meq/g to 10.0 meq/g as expressed by the ion exchange

capacity, further preferably 5.5 meq/g to 9.0 meq/g., and particular preferably 5.5 meq/g to 7.0 meq/g.

Further, the introduction amount of the ion exchange group of the whole polyarylene type block copolymer is preferably 0.5 meq/g to 4.0 meq/g as expressed by the ion exchange capacity, and further preferably 1.0 meq/g to 2.8 meq/g.

By the above-described method, it is possible to obtain a polyarylene type block copolymer containing the structural unit represented by the general formula (4) as a block having an ion exchange group, and when the polyarylene type block copolymer is specifically exemplified, the following copolymers can be mentioned:

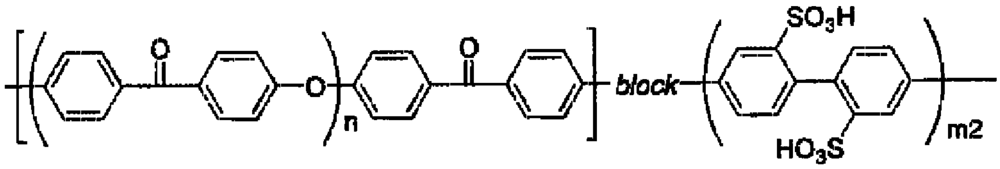

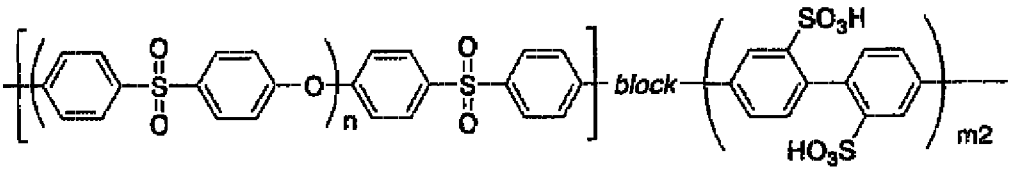

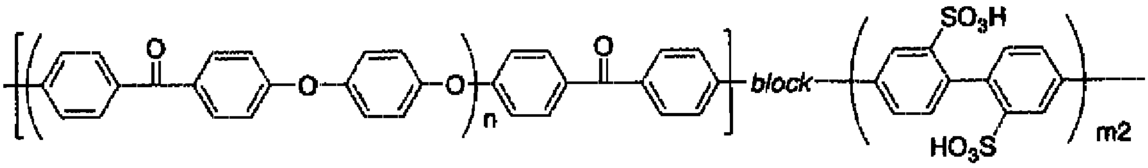

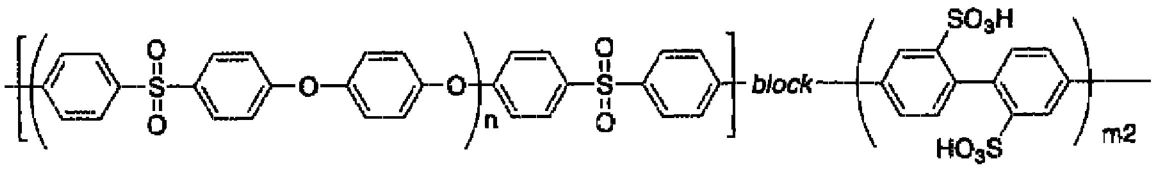

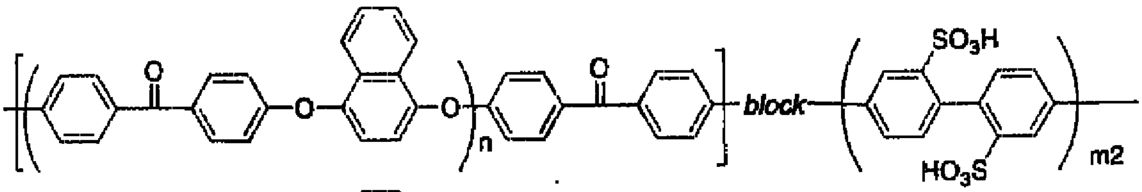

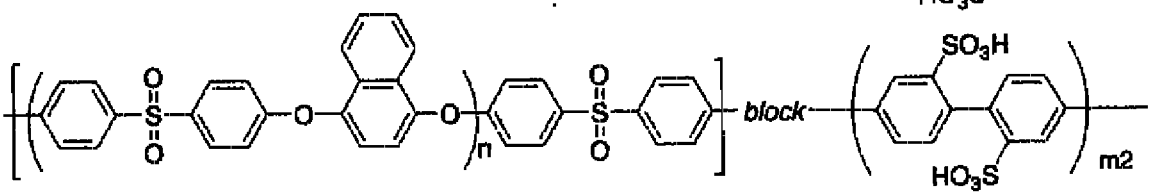

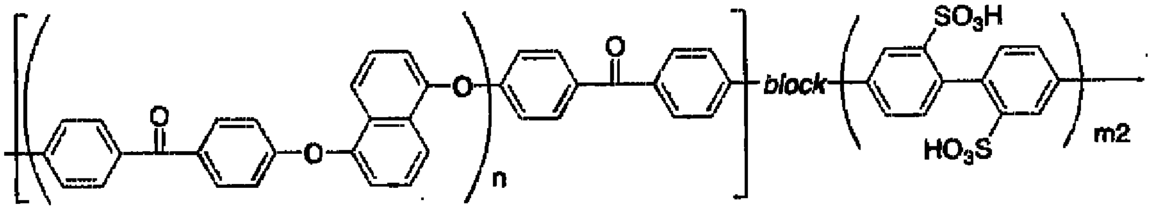

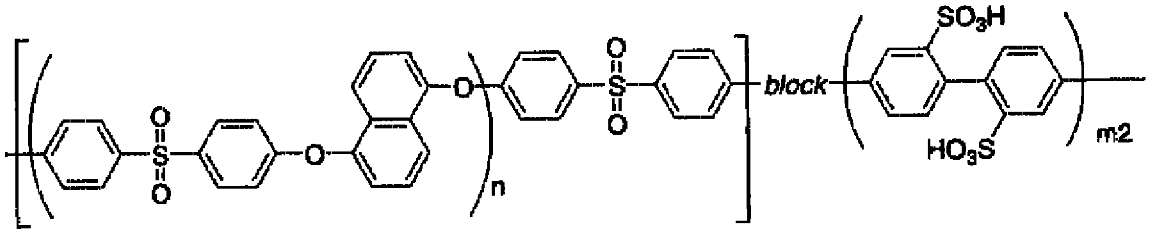

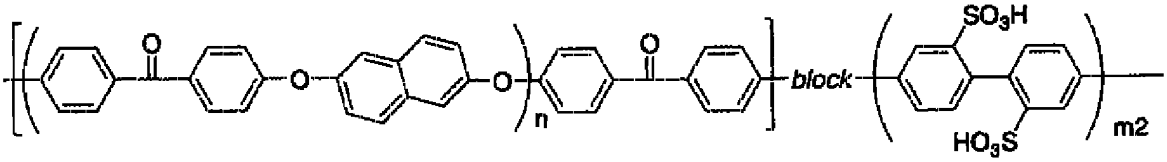

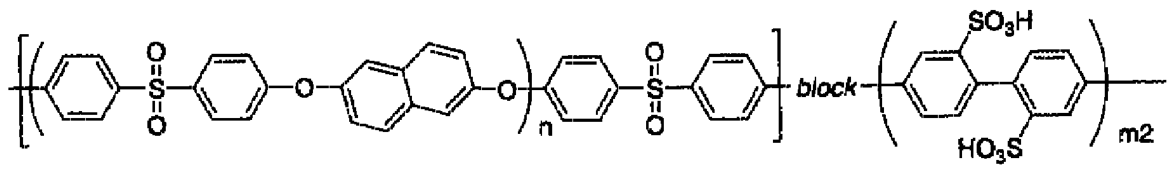

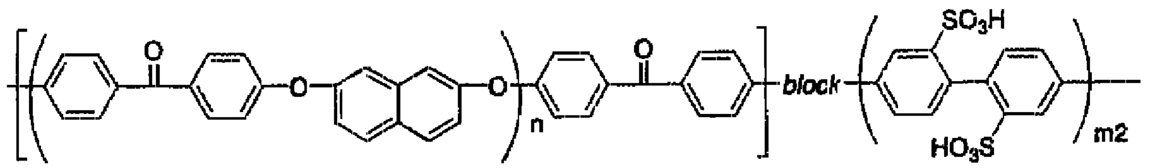

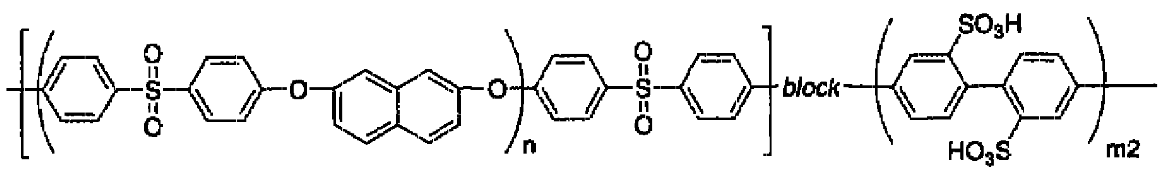

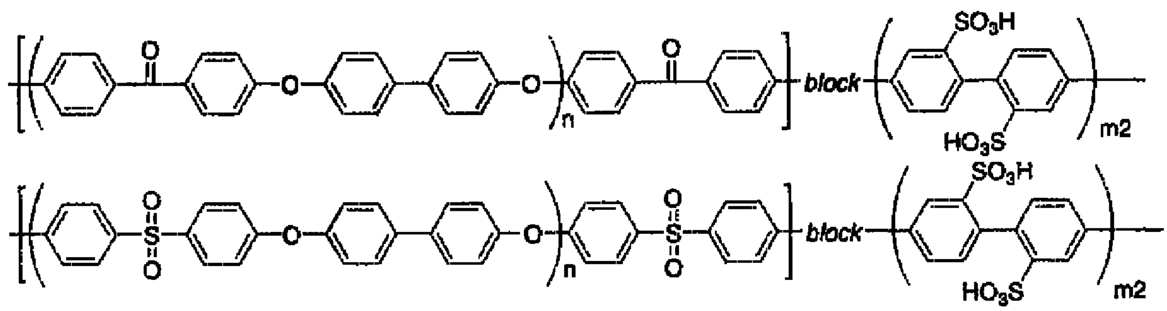

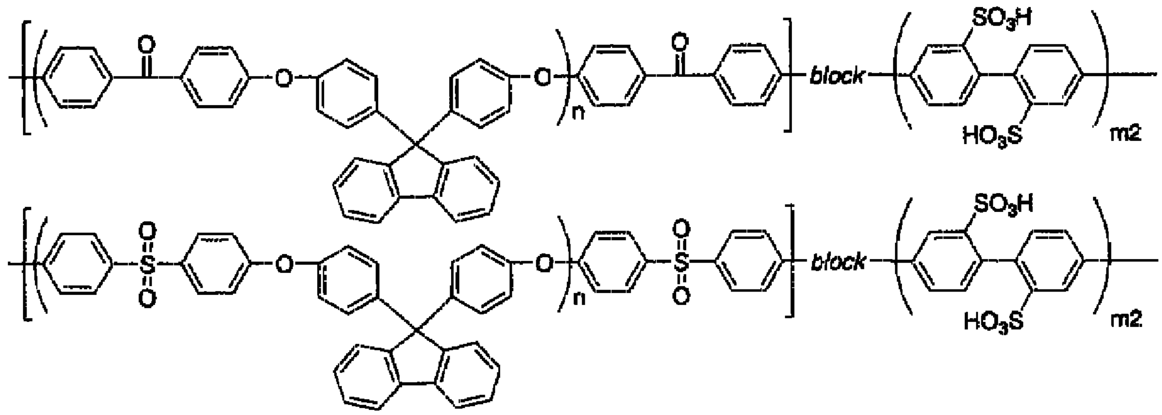

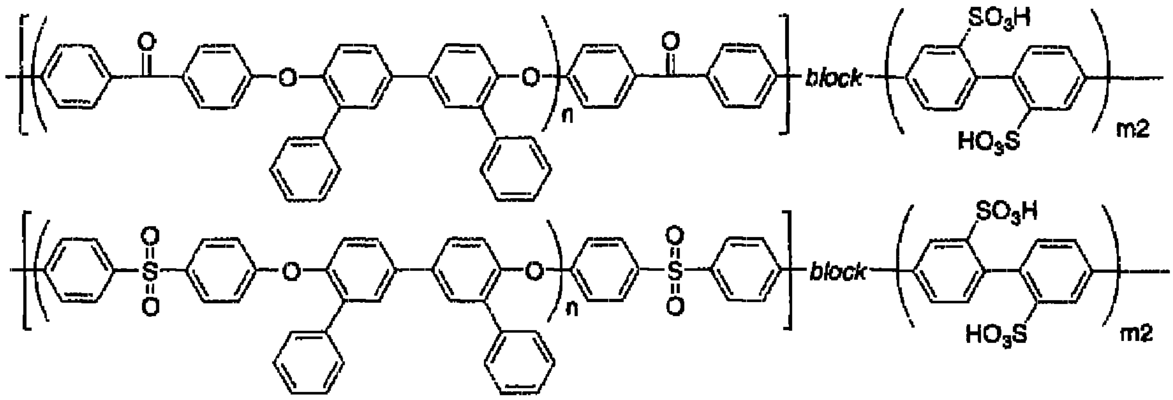

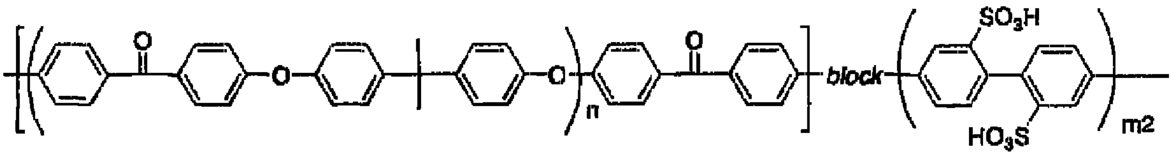

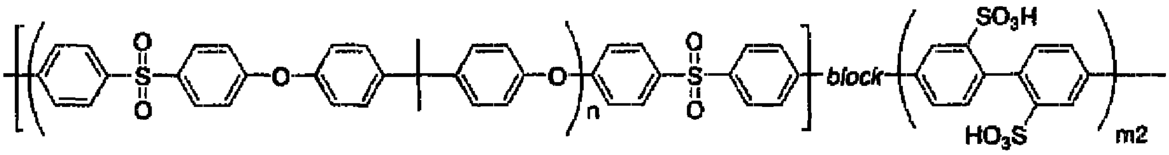

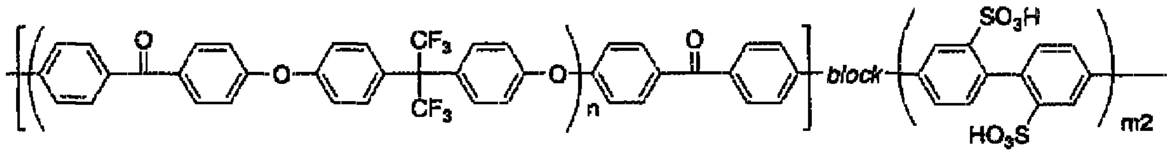

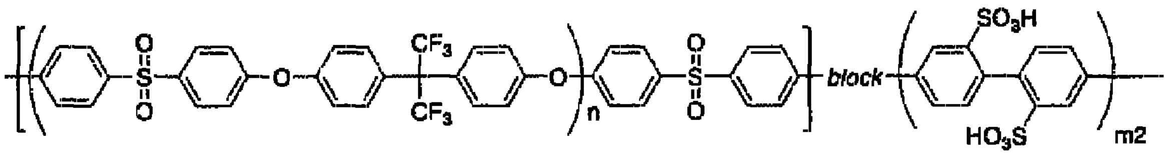

The block copolymer thus exemplified contains the block represented by said general formula (4) as a block having an ion exchange group, and said TP value is substantially 0.

As the production method of the above-exemplified polyarylene type block copolymer of the present invention, it can also be obtained in such a manner that compounds represented by said general formula (7) and/or general formula (5) are condensed to produce a compound represented by the following general formula (10), and then this compound is condensed with a compound represented by said general formula (6):

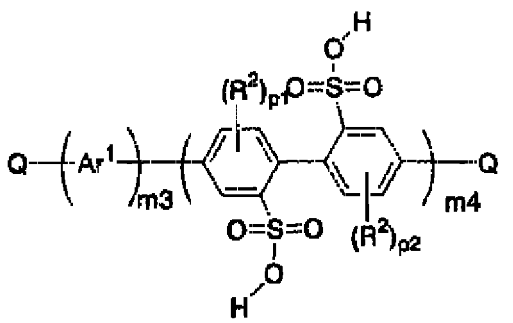

(10)

wherein $Ar^1$ and Q have the same definitions as in said general formula (1), $R^2$, p1 and p2 have the same definitions as in said general formula (4), m3 and m4 each independently represent an integer of 1 or more, and m3 + m4 is an integer of 5 or more.

In the compound represented by said general formula (10), a part of or all of the compound represented by the general formula (7) may be replaced by a compound represented by said general formula (8) (a part of or all of $Ar^1$s in said general formula (10) may be replaced by $Ar^6$), and in this case, by substituting $Ar^1$ for $Ar^6$ as described above, it is possible to obtain a compound represented by the general formula (10). By condensing the compound with a compound represented by said general formula (6), it is possible to give a polyarylene type block copolymer of the present invention.

In this manner, in the case where a precursor of a block having an ion exchange group represented by the general formula (10) is obtained from a compound represented by said general formula (7) and a compound represented by said general formula (5) and/or a compound represented by the general formula (6), it is also easy for said TP value to be a preferable value by controlling the copolymerization ratio.

A polyarylene type block copolymer of the present invention described above can be preferably used as a member for a fuel cell.

Next, a case where the polyarylene type block copolymer is used as a proton conductive membrane of electrochemical devices such as fuel cells will be described.

In this case, the polyarylene type block copolymer of the present invention is generally used in a membrane form, and a method for converting the copolymer into a membrane is not particularly limited, for example, a method for forming a membrane, from a solution state (solution casting) is preferably used.

Specifically, the polyarylene type block copolymer of the present invention is dissolved in a proper solvent, the solution is cast on a glass plate, and the solvent is removed to produce a membrane. The solvent used for membrane forming is not particularly limited as long as it can solve the polyarylene type block copolymer and can be removed afterward, and there are preferably used aprotic polar solvents such as DMF, DMAc. NMP and DMSO; or chlorinated solvents such as dichloromethane, chloroform, 1,2-dichloroethane, chlorobenzene and dichlorobenzene; alcohols such as methanol, ethanol and propanol; and alkyleneglycol monoalkyl ethers such as ethyleneglycol monomethyl ether, ethyleneglycol monoethyl ether, propyleneglycol monomethyl ether and propyleneglycol monoethyl ether. These may be used alone, or according to need, may be used in combination of two of or more of the solvents. Above all, DMSO, DMF, DMAc and NMP are preferable because of high solubility of the polymer.

The thickness of the membrane is not particularly limited, but preferably 10 to 300 μm. In the case of a membrane with a membrane thickness of 10 μm or more, it is preferable because practical strength is superior, and in the case of a membrane of 300 μm or less, it is preferable because membrane resistance is small and characteristics of electrochemical devices tend to further improve. The membrane thickness can be controlled by the concentration of a solution and the coating thickness on a substrate.

It Is also possible to add a plasticizer, a stabilizer or a mold releasing agent used for ordinary polymers to the polyarylene type block copolymer of the present invention in order to improve various properties of the membrane. In addition, by a method of blend-casting in the same solvent or the like, the copolymer of the present invention can be made into a composite alloy with another polymer.

further, to make water-management easier in applications of fuel cells, it is also known to add organic or inorganic fine powders as a water retaining agent. All of these known methods can be used as long as they do not disturb the objects of the present invention. It is also possible to carry out crosslinking by irradiation of electron ray, radioactive ray or the like in order to improve mechanical strength of the membrane.

In order to further improve the strength, flexibility and durability of the proton conductive membrane using the polymer electrolyte having the polyarylene type block copolymer of the present invention as an effective component, it is also possible to immerse and combine the polymer electrolyte having the polyarylene type block copolymer of the present invention as an effective component with a porous base material to give a composite membrane. As the combining method, the known method can be adopted.

The porous base material is not particularly limited as long as it fulfills the foregoing intended use, and for example, a porous membrane, fabric, non-woven fabric and fibril can be mentioned, which can be used regardless of the shape and material. The material for the porous base material is preferably an aliphatic, aromatic, or fluorine-containing polymer in consideration of the viewpoint of heat resistance and a reinforcement effect of physical strength.

In the case where a polymer electrolyte composite membrane using the polyarylene type block copolymer of the present invention is used as a proton conductive membrane in a solid polymer type fuel cell, the membrane thickness of the porous base material is preferably 1 to 100 μm, further preferably 3 to 30 μm, and particularly preferably 5 to 20 μm, the pore diameter of the porous base material is preferably 0.01 to 100 μm, further preferably 0.02 to 10 μm, the porosity of the porous base material is preferably 20 to 98%, further preferably 40 to 95%.

When the membrane thickness of the porous base material is 1 μm or more, it provides a reinforcement effect of strength after combination, or a more excellent reinforcement effect giving flexibility and durability, and also gas leakage (cross-leak) hardly occurs. Whereas when the membrane thickness is 100 μm or less, the electric resistance is reduced more, and the resultant composite membrane becomes better as a proton conductive membrane in a solid polymer type fuel cell. When the pore diameter is 0.01 μm or more, filling of the polyarylene type block copolymer of the present invention becomes easier, and when it is 100 μm or less, the reinforcement effect on the polyarylene type block copolymer becomes larger. When the porosity is 20% or more, the resistance as a proton conductive membrane becomes smaller, and when it is 98% or less, the strength of the porous base material itself becomes higher, which is preferable because the reinforcement effect is further improved.

In addition, it is also possible to use the polymer electrolyte composite membrane and the polymer electrolyte membrane as a. proton conductive membrane of fuel cells by laminating these.

Next, the fuel cell of the present invention will be described.

The fuel cell of the present invention can be produced by assembling an electroconductive substance as a catalyst and a current collector onto both surfaces of the polyarylene type block copolymer membrane.

Herein, the catalyst is not particularly limited as long as it activates an oxidation/reduction reaction with oxygen or hydrogen and the known one can be employed, but it is preferable to use a fine particle of platinum or a platinum alloy. Fine particles of platinum or a platinum alloy are often carried on particulate or fibrous carbon such as active carbon and graphite, and they are preferably used.

Further, a catalyst layer is obtained in such a manner that platinum carried on carbon is mixed with an alcohol solution of a perfluoroalkylsulfonic acid resin as a polymer electrolyte to give a paste, which is applied and dried on a gas diffusion layer and/or a polymer electrolyte membrane and/or a polymer electrolyte composite membrane. As a specific method, for example, a known method can be used as described in J. Electrochem. Soc. : Electrochemical Science and Technology, 1988, 135 (9), 2209 or the like.

Herein, in place of the perfluoroalkylsulfonic acid resin as the polymer electrolyte, a polymer electrolyte comprising the polyarylene type block copolymer of the present invention as an effective component can also be used for a catalyst composition, and the catalyst layer obtained by using this catalyst composition is preferable as a catalyst layer because of excellent proton conductivity and dimensional stability upon water uptake of the polyarylene type block copolymer of the present invention.

Also with respect to the electroconductive substance as a current collector the known material can be used., and porous carbon fabric, carbon non-woven fabric and carbon paper are preferable because they transport a raw material gas into a catalyst efficiently.

The fuel cells of the present invention produced in this manner can be used in various forms using hydrogen gas, reformed hydrogen gas or methanol as the fuel.

A solid polymer type fuel cell equipped with the polyarylene type block copolymer of the present invention thus obtained as a proton conductive membrane and/or a catalyst layer is excellent in power generation performance and can be provided as a fuel cell with long-life.

Embodiments of the present invention have been described above, however, the embodiments disclosed above are mere exemplifications, and the scope of the present invention is not limited to these embodiments. The scope of the present invention is shown in claims, and further includes all modifications within the equivalent meaning and scope to those described in claims.

Hereinafter, the present invention will be described with reference to Examples, but the present invention is not to be limited to these Examples.

Measurement of molecular weight:

By a gel permeation chromatography (GPC), a number-average molecular weight (Mn) and a weight-average molecular weight (Mw) in terms of polystyrene were measured. Additionally, as the GPC analysis conditions, any one of following conditions 1 to 3 was used and the condition used for molecular weight measurements was additionally noted.

[Condition 1]

GPC measuring apparatus: manufactured by TOSOH Corporation; HLC-8220
Column: manufactured by Shodex Corporation; two AT-80Ms serially-connected
Column temperature: 40ºC
Moving phase solvent: DMAc (LiBr was added so as to be 10 mmol/$dm^3$)
Solvent flow rate: 0.5 mL/min

[Condition 2]

GPC measuring apparatus: manufactured by TOSOH Corporation; HLC-8220
Column: manufactured by TOSOH Corporation; TSK-GEL GMHHR-M
Column temperature: 40ºC
Moving phase solvent: DMAc (LiBr was added so as to be 10 mmol/$dm^3$)
Solvent flow rate: 0.5 mL/min

[Condition 3]

GPC measuring apparatus: manufactured by SHIMADZU Corporation; CTO-10A
Column: manufactured by TOSOH Corporation: TSK-GEM
Column temperature: 40ºC
Moving phase solvent: DMAc (LiBr was added so as to be 10 mmol/$dm^3$)
Solvent flow rate: 0.5 mL/min

Measurement of water uptake:

A dried membrane was weighed, and from increase in weight of the membrane after immersion in deionized water at 100°C for 2 hours, water uptake was calculated and the ratio to the dried membrane was obtained.
Measurement of ion exchange capacity (IEC):

It was measured by a titration method.

Measurement of proton conductivity:

It was measured by an alternating current method under the conditions of a temperature of 80ºC, relative humidities of 50% and 90%.

Humidity dependence:

Humidity dependence of proton conductivity was expressed as a ratio of proton conductivities under the conditions of relative humidities of 50% and 90%, at 80ºC.

Ratio of dimensional change upon swelling by water uptake:

A size in the surface direction (Ld) of a membrane dried under the conditions of 23ºC and a relative humidity of 50%, and a size in the surface direction (Lw) of a membrane right after being swelled by immersion in hot water of 80ºC for 1 hour or more were measured, and the ratio of dimensional change was obtained by calculating as follow:

$$\text{Ratio of dimensional change [\%]} = (Lw-Ld) \div Ld \times 100\ (\%)$$

Example 1

Under argon atmosphere, a flask equipped with an azeotropic distillation apparatus was charged with 600 ml of DMSO, 200 mL of toluene, 26.5 g (106.3 mmol) of sodium 2,5-dichlorobenzenesulfonate. 10.0 g of the following chloro-terminated polyethersulfone (Sumika Excell PES 5200P manufactured by Sumitomo Chemical Co., Ltd., Mn = $5.4 \times 10^4$, Mw = $1.2 \times 10^5$ [Condition 1]) and 43.8 g (280.2 mmol) of 2,2'-bipyridyl, and stirred.

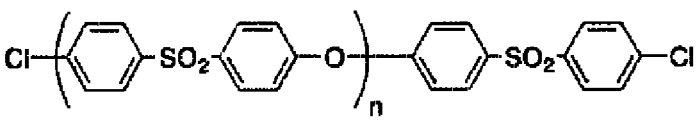

Then, the temperature of the bath was raised to 150ºC. water in the system was subjected to azeotropic dehydration by thermally distilling toluene away, and then the bath was cooled to 60ºC. Next, 73.4 g (266.9 mmol) of bis(1,5-cyclooctadlene) nickel (0) was added thereto, raised to 80ºC, and stirred at the temperature for 5 hours. After being left for cooling, the reaction mixture was poured into a large amount of 6 mol/L hydrochloric acid to precipitate a polymer and the polymer was separated by filtration. Thereafter, washing/filtration operation was repeated several times with 6 mol/L hydrochloric acid, then, washed with water until the filtrate became neutral, dried under reduced pressure, thereby to give 16.3 g of the following target polyarylene type block copolymer.

The obtained polyarylene type block copolymer was dissolved in DMSO at a concentration of 10 wt% to prepare a polymer electrolyte solution. Thereafter, the obtained polymer electrolyte solution was cast on a glass plate, dried at 80ºC under ambient pressure for 2 hours to remove the solvent, then, subjected to a hydrochloric acid treatment and washing with ion-exchanged water, thereby producing about 30 μm thick of a polymer electrolyte membrane.

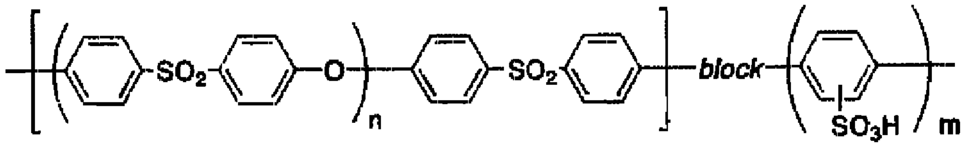

Mn: $1.5 \times 10^5$ [Condition 1], $1.1 \times 10^5$ [Condition 2]
Mw: $2.7 \times 10^5$ [condition 1], $2,0 \times 10^5$ [Condition 2]
Water uptake: 120%
IEC: 2.3 meq/g
Proton conductivity: $4.3 \times 10^{-2}$ S/cm (relative humidity 50%),
$2.3 \times 10^{-1}$ S/cm (relative humidity 90%)
Humidity dependence: $2.3 \times 10^{-1} + 4.3 \times 10^{-2} = 5.3$
Ratio of dimensional change: 2.7%

Based on Mn in terms of polystyrene of the chloro-terminated polyethersulfone used, when estimated from Mn and IEC of the obtained polyarylene type block copolymer, m is determined to be 190 on average.

Example 2

Under argon atmosphere, a flask equipped with an azeotropic distillation apparatus was charged with 380 ml of DMSO, 100 mL of toluene, 8.7 g (34.9 mmol) of sodium 2,5-dichlorobenzenesulfonate, 4.0 g of the following chloro-terminated polyethersulfone (produced from bis(4-chlorophenyl)sulfons and bis(4-hydroxyphenyl)sulfone using bis(4-chloraphenyl)sulfone in excess, Mn = $2.1 \times 10^4$, Mw = $4.4 \times 10^4$ [Condition 2]) and 14.0 g (89.5 mmol) of 2,2'-bipyridyl, and stirred.

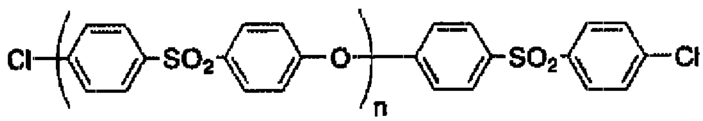

Then, the temperature of the bath was raised to 150ºC, water in the system was subjected to azeotropic dehydration by thermally distilling toluene away, and then the bath was cooled to 65ºC. Next, 23.4 g (85.2 mmol) of bis(1,5-cyclooctadiene) nickel (0) was added thereto, and stirred at 80ºC for 5 hours. After being left for cooling, the reaction mixture was poured into a large amount of 6 mol/L hydrochloric acid to precipitate a polymer and the polymer was collected by filtration. Thereafter, washing/filtration operation was repeated several times with 6 mol/L hydrochloric acid, then, washed with water until the filtrate became neutral, dried under reduced pressure, thereby to give 6.6 g of the following target polyarylene type block copolymer.

The obtained polyarylene type block copolymer was dissolved in DMSO at a concentration of 10 wt% to prepare a polymer electrolyte solution. Thereafter, the obtained polymer electrolyte solution was cast on a glass plate, dried at 80ºC under ambient pressure for 2 hours to remove the solvent, then, subjected to a hydrochloric acid treatment and washing with Ion-exchanged water, thereby producing about 30 μm thick of a polymer electrolyte membrane.

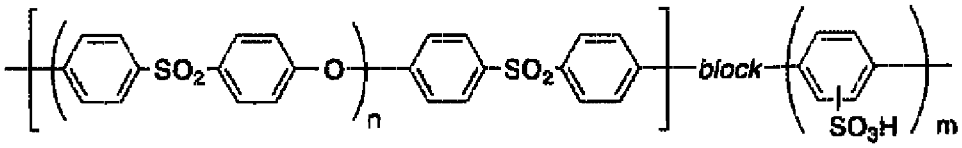

Mn: 6.9 × $10^4$ [Condition 2]
Mw: 1.3 × $10^5$ [condition 2]
Water uptake: 140%
IEC: 2.6 meq/g
Proton conductivity: 5.5 × $10^{-2}$ S/cm (relative humidity 50%),
2.9 × $10^{-1}$ S/cm (relative humidity 90%)
Humidity dependence: 2.9 × $10^{-1}$ + 5.5 × $10^{-2}$ = 5.3
Ratio of dimensional change: 6.3%

Based on Mn in terms of polystyrene of the chloro-terminated polyethersulfone used, when estimated from Mn and IEC of the obtained polyarylene type block copolymer, m is determined to be 90 on average.

Further, 50 mg of the obtained polyarylene type block copolymer and 7.5 mL of a DMF solution of 2.5 mL of piperidine were reacted at 200°C for 12 hours, and left for cooling, and the reaction mixture was poured into a large excess of acetone, the resultant precipitate (precipitate of a block having an ion exchange group) was measured for molecular weight to find that Mn in terms of polyethylene oxide was 1.1 × $10^4$. From this value, m is determined to be 70 on average.

Example 3

Under argon atmosphere, a flask equipped with an azeotropic distillation apparatus was charged with 130 ml of DMSO, 50 mL of toluene, 1.7 g (6.7 mmol) of sodium 2,5-dichlorobenzenesulfonate, 5.6 g of the following chloro-terminated polyethersulfone (produced from bis(4-chlorophenyl)sulfone and bis(4-hydroxyphenyl)sulfone using bis(4-chlorophenyl)sulfone in excess, Mn = 2.1 × $10^4$, Mw = 4.4 ×* $10^4$ [Condition 2]) and 2.9 g (18.4 mmol) of 2.2'-bipyridyl, and stirred.

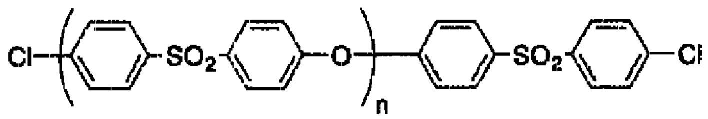

Then, the temperature of the bath was raised to 150ºC, water in the system was subjected to azeotropic dehydration by thermally distilling toluene away, and then the bath was cooled to 65ºC. Next, 5.1 g (18.4 mmol) of bis(1,5-cyclooctadiene) nickel (0) was added thereto, and stirred at 80ºC for 5 hours. After being left for cooling, the reaction mixture was poured into a large amount of 6 mol/L hydrochloric acid to precipitate a polymer and the polymer was collected by filtration. Thereafter, washing/filtration operation was repeated several times with 6 mol/L hydrochloric acid, then, washed with water until the filtrate became neutral, dried under reduced pressure, thereby to give 6.2 g of the following target polyarylene type block copolymer.

The obtained polyarylene type block copolymer was dissolved in DMSO at a concentration of 10 wt% to prepare a polymer electrolyte solution. Thereafter, the obtained polymer electrolyte solution was cast on a glass plate, dried at 80ºC under ambient pressure for 2 hours to remove the solvent, then, subjected to a hydrochloric acid treatment and washing with ion-exchanged water, thereby producing about 30 μm thick of a polymer electrolyte membrane.

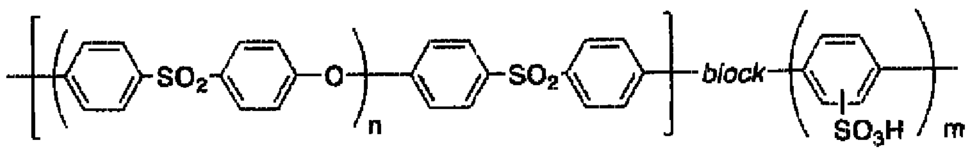

Mn: $1.1 \times 10^5$ [Condition 2]
Mw: $2.6 \times 10^5$ [condition 2]
IEC: 0.8 meq/g

Based on Mn in terms of polystyrene of the chloro-terminated polyethersulfone used, when estimated from Mn and IEC of the obtained polyarylene type block copolymer, m is determined to be 20 on average.

Example 4

Under argon atmosphere, a flask equipped with an azeotropic distillation apparatus was charged with 110 ml of DMSO, 50 mL of toluene, 4.8 g (19.3 mmol) of sodium 2,5-dichlorobenzenesulfonate, 1.8 g of the following chloro-terminated polyaryleneethersulfone (Polyphenylsulfone manufactured by Aldrich Corporation. Mn = $3.1 \times 10^4$, Mw = $6.5 \times 10^4$ [Condition 2]) and 7.9 g (50.6 mmol) of 2,2'-bipyridyl, and stirred.

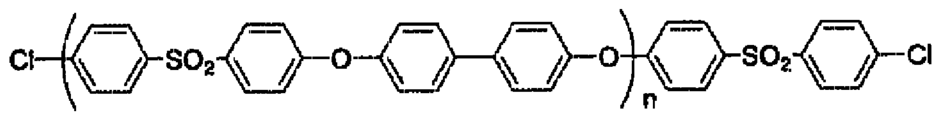

Then, the temperature of the bath was raised to 150ºC, water in the system was subjected to azeotropic dehydration by thermally distilling toluene away, and then the bath was cooled to 65QC. Next, 13.2 g (48.0 mmol) of bis(1,5-cyclooctadiene) nickel (0) was added thereto, and stirred at 80QC for 5 hours while keeping the temperature. After being left for cooling, the reaction mixture was poured into a large amount of methanol to precipitate a polymer and the polymer was collected by filtration. The obtained crude polymer was dispersed in 6 mol/L hydrochloric acid and collected by filtration. The same operation was repeated several times, then, the resultant polymer was dispersed in a large amount of methanol and collected by filtration. The same operation was repeated several times, then, the resultant polymer was dried. Thereafter, the obtained crude polymer was dissolved in DMSO at a concentration of 5 wt%, poured into a large amount of 6 mol/L hydrochloric acid to reprecipitate/purify the polymer. Further, washing/filtration operation was repeated several times with 6 mol/L hydrochloric acid, then, the polymer was washed with water until the filtrate became neutral, dried under reduced pressure, thereby to give 3.1 g of the following target polyarylene type block copolymer.

The obtained polyarylene type block copolymer was dissolved in NMP at a concentration of 10 wt% to prepare a polymer electrolyte solution. Thereafter, the obtained polymer electrolyte solution was cast on a glass plate, dried at 80ºC under ambient pressure for 2 hours to remove the solvent, then, subjected to a hydrochloric acid treatment and washing with ion-exchanged water, thereby producing about 40 μm thick of a polymer electrolyte membrane.

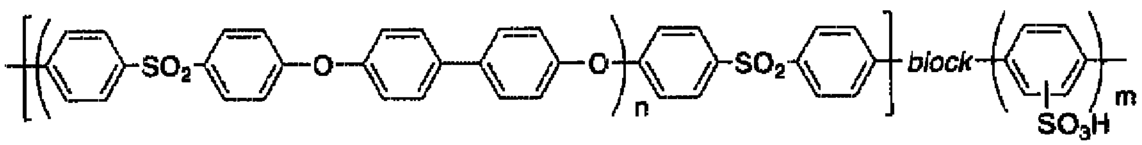

Mn: $1.2 \times 10^5$ [Condition 2]
Mw: $3.0 \times 10^5$ [condition 2]
Water uptake: 120%
IEC: 2.6 meq/g
Proton conductivity: $5.5 \times 10^{-2}$ S/cm (relative humidity 50%),
$2.7 \times 10^{-1}$ S/cm (relative humidity 90%)
Humidity dependence: $2.7 \times 10^{-1} + 5.5 \times 10^{-2} = 4.9$
Ratio of dimensional change: 3.3%

Based on Mn in terms of polystyrene of the chloro-terminated polyaryleneethersulfone used, when estimated from Mn and IEC of the obtained polyarylene type block copolymer, m is determined to be 140 on average.

Example 5

Under argon atmosphere, a flask equipped with an azeotropic distillation apparatus was charged with 130 ml of DMSO. 60 mL of toluene, 5.3 g (21.4 mmol) of sodium 2,5-dichlorobenzenesulfonate, 2.0 g of the following chloro-terminated polyaryleneethersulfone (Mn = 1.2 × $10^4$, Mw = 3.0 × $10^4$ [Condition 2]) and 8.2 g (52.3 mmol) of 2,2'-bipyridyl, and stirred.

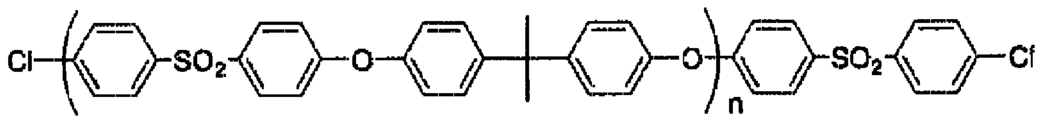

Then, the temperature of the bath was raised to 150ºC, water in the system was subjected to azeotropic dehydration by thermally distilling toluene away, and then the bath was cooled to 65QC. Next, 14.4 g (52.3 mmol) of bis(1,5-cyclooctadiene) nickel (0) was added thereto, and stirred at 80QC for 5 hours while keeping the temperature. After being left for cooling, the reaction mixture was poured into a large amount of methanol to precipitate a polymer and the polymer was collected by filtration. The obtained crude polymer was dispersed in 6 mol/L hydrochloric acid and collected by filtration. The same operation was repeated several times, then, the resultant polymer was dispersed in a large amount of methanol and collected by filtration. The same operation was repeated several times, then, the resultant polymer was dried. Thereafter, the obtained crude polymer was dissolved in NMP at a concentration of 10 wt%, poured into a large amount of 6 mol/L hydrochloric acid to reprecipitate/purify the polymer. Further, washing/filtration operation was repeated several times with 6 mol/L hydrochloric acid, then, the polymer was washed with water until the filtrate became neutral, dried under reduced pressure, thereby to give 3. 6 g of the following target polyarylene type block copolymer.

The obtained polyarylene type block copolymer was dissolved in NMP at a concentration of 10 wt% to prepare a polymer electrolyte solution. Thereafter, the obtained polymer electrolyte solution was cast on a glass plate, dried at 80ºC under ambient pressure for 2 hours to remove the solvent, then, subjected to a hydrochloric acid treatment and washing with ion-exchanged water, thereby producing about 30 μm thick of a polymer electrolyte membrane.

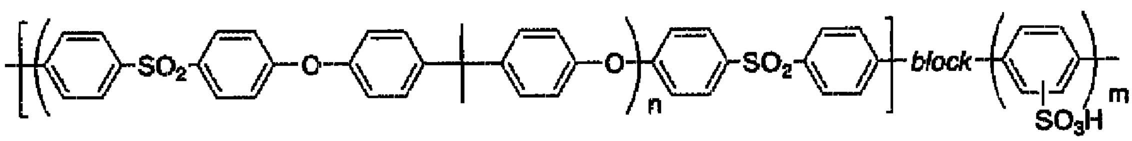

Mn: 1.1 × $10^5$ [Condition 2]
Mw: 2.1 × $10^5$ [condition 2]
Water uptake: 100%
IEC: 2.8 meq/g
Proton conductivity: 5.3 × $10^{-2}$ S/cm (relative humidity 50%),
3.0 × $10^{-1}$ S/cm (relative humidity 90%)
Humidity dependence: 3.0 × $10^{-1}$ + 5.2 × $10^{-2}$ = 5.8
Ratio of dimensional change: 4.6%

Based on Mn in terms of polystyrene of the chloro-terminated polyaryleneethersulfone used, when estimated from Mn and IEC of the obtained polyarylene type block copolymer, m is determined to be 60 on average.

Example 6

Under argon atmosphere, a flask equipped with an azeotropic distillation apparatus was charged with 130 ml of DMSO, 60 mL of toluene, 5.3 g (21.3 mmol) of sodium 3,5-dichlorobenzenesulfonate, 2.0 g of the following chloro-terminated polyethersulfone (Sumika Excell PES 5200P manufactured by Sumitomo Chemical Co., Ltd., Mn = 5.4 × $10^4$, Mw = 1.2 × $10^5$ [Condition 1]) and 8.4 g (53.5 mmol) of 2,2'-bipyridyl, and stirred.

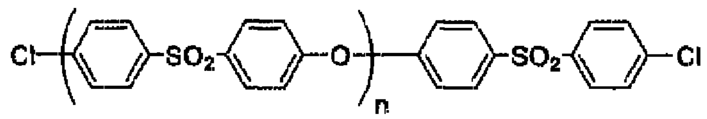

Then, the temperature of the bath was raised to 150ºC, water in the system was subjected to azeotropic dehydration by thermally distilling toluene away, and then the bath was cooled to 65ºC. Next, 14.7 g (53.5 mmol) of bis(1,5-cyclooctadiene) nickel (0) was added thereto, and stirred at 80ºC for 5 hours while keeping the temperature. After being left for cooling, the reaction mixture was poured into a large amount of methanol to precipitate a polymer and the polymer was collected by filtration. The obtained crude polymer was dispersed in 6 mol/L hydrochloric acid and collected by filtration. The same operation was repeated several times, then, the resultant polymer was dispersed in a large amount of methanol and collected by filtration. The same operation was repeated several times, then, the resultant polymer was dried. Thereafter, the obtained crude polymer was dissolved in NMP at a concentration of 15 wt%, poured into a large amount of 6 mol/L hydrochloric acid to reprecipitate/purify the polymer. Further, washing/filtration operation was repeated several times with 6 mol/L hydrochloric acid, then, the polymer was washed with water until the filtrate became neutral, dried under reduced pressure, thereby to give 0.6 g of the following target polyarylene type block copolymer.

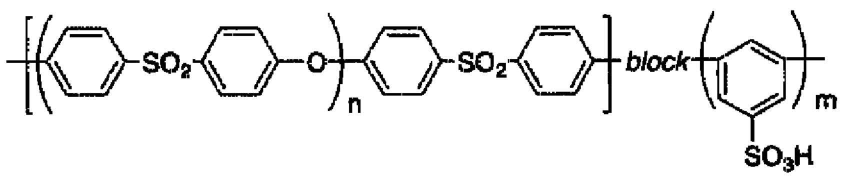

Example 7

A mixture with a weight ratio of 90 : 10 of the polyarylene type block copolymer (IEC = 2.2 meq/g) produced in accordance with Example 1 and a phosphonic acid group containing polymer described in Reference Example 3 of Japanese Unexamined Patent Publication No. 2005-38834 was dissolved in DMSO at a concentration of 10 wt% to prepare a polymer electrolyte solution. Thereafter, the obtained polymer electrolyte solution was cast on a glass plate, dried at 80ºC under ambient pressure for 2 hours to remove the solvent, then, subjected to a hydrochloric acid treatment and washing with ion-exchanged water, thereby producing about 35 μm thick of a polymer electrolyte membrane.

Water uptake: 100%
IEC: 2.1 meq/g
Proton conductivity: $4.8 \times 10^{-2}$ S/cm (relative humidity 50%),
$2.8 \times 10^{-1}$ S/cm (relative humidity 90%)
Humidity dependence: $2.8 \times 10^{-1} + 4.8 \times 10^{-2} = 5.8$
Ratio of dimensional change: 2.1%

Example 8

A zinc powder (55 mg, 0.84 mmol) was added to a dimethylsulfoxide solution (1.2 ml) of lithium 4,4'-dichlorobiphenyl-2,2'-disulfonate (119 mg, 0.30 mmol) and Sumika Excell PBS 5200P (60 mg) manufactured by Sumitomo Chemical Co., Ltd., and the mixture was heated to 60QC (reaction mixture (1)). Separately, a dimethylsulfoxide solution (1.2 ml) of anhydrous nickel chloride (97 mg, 0.75 mmol) was heated to 60ºC, 2,2'-bipyridyl (129 mg, 0.83 mmol) was added thereto, and stirred for 10 minutes (reaction mixture (2)). The reaction mixture (2) was poured into the reaction mixture (1), heated to 70ºC, stirred for 4 hours, thereby to give a polyarylene type block copolymer. The results of molecular weight analysis by GPC for the obtained copolymer are shown as follows:

Mn: $8.1 \times 10^4$ [Condition 3]
Mw: $1.5 \times 10^5$ [condition 3]

The ion exchange group of the copolymer obtained as described above is converted by an acid treatment to a free acid group to give a polyarylene type block copolymer with the following structure.

This polyarylene type block copolymer comprises a block having an ion exchange group (sulfonic acid group) of the present invention and a block having substantially no ion exchange group, and shows a preferable proton conductivity, humidity dependence thereof and dimensional stability.

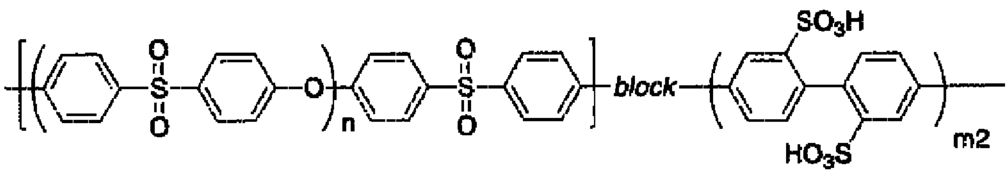

Example 9

Production of membrane-electrode assembly

To 6 ml of a Nafion solution (5 wt%, manufactured by Aldrich Corporation), 833 mg of platinum-carried carbon carrying 50 wt% of platinum and 13.2 mL of ethanol were added, and the mixture was stirred sufficiently to prepare a catalyst layer solution. This catalyst layer solution was coated by a spray method onto the polymer electrolyte membrane obtained in Example 1 for a platinum-carrying density to be 0.6 mg/$cm^2$, and the solvent was removed to give a membrane-electrode assembly.

Production of fuel cell

A commercially available JARI standard cell was used. On both outer sides of the membrane-electrode assembly, a carbon separator with a trench cut for a gas passage was placed and further, a current collector and an end plate were placed outside the separator, and the membrane-electrode assembly was tightened with bolts, thereby to fabricate a fuel cell with 25 $cm^2$ of an effective membrane area.

Evaluations on power generation performance of fuel cell

The fuel cell was maintained at 80ºC, and humidified hydrogen and humidified air were supplied to an anode and a cathode, respectively, so that a back pressure at a gas outlet of the cell become 0.1 MPaG. Humidification was conducted by passing gas through a bubbler, and the temperatures of water were set to 45ºC for the hydrogen bubbler and 55ºC for the air bubbler. The gas flow rate of hydrogen was set to 529 mL/min, and the gas flow rate of air was set to 1.665 mL/min. A voltage at a current density of 1.0 A/$cm^2$ was measured to find 0.6 V.

Comparative Example 1

A polyarylene type polymer electrolyte with an IEC of 2.0 meq/g was produced in accordance with Example 13 of Japanese Unexamined Patent Publication No. 2003-113136.

The obtained polymer electrolyte was dissolved in NMP at a concentration of 15 wt% to prepare a polymer electrolyte solution. Thereafter, the obtained polymer electrolyte solution was cast on a glass plate, dried at 80ºC under ambient pressure for 2 hours to remove the solvent, then, subjected to a hydrochloric acid treatment and washing with ion-exchanged water, thereby producing about 30 μm thick of a polymer electrolyte membrane.

Mn: $1.3 \times 10^5$ [Condition 1]
Mw: $2.7 \times 10^5$ [condition 1]
Water uptake: 120%
IEC: 2.0 meq/g
Proton conductivity: $1.1 \times 10^{-2}$ S/cm (relative humidity 50%),
$8.9 \times 10^{-2}$ S/cm (relative humidity 90%)
Humidity dependence: $8.9 \times 10^{-2} + 1.1 \times 10^{-2} = 8.1$
Ratio of dimensional change: 28.8%

When the polyarylene type block copolymer having a sulfonic acid group in the side chain of the polyarylene bone structure of Comparative Example 1 is compared with the polyarylene type block copolymer having a sulfonic acid group in the main chain described in Example 1, the polyarylene type block copolymer described in Example 1 is

remarkably superior in the aspects of humidity dependence of proton conductivity and ratio of dimensional change upon swelling by water uptake.

Example 10

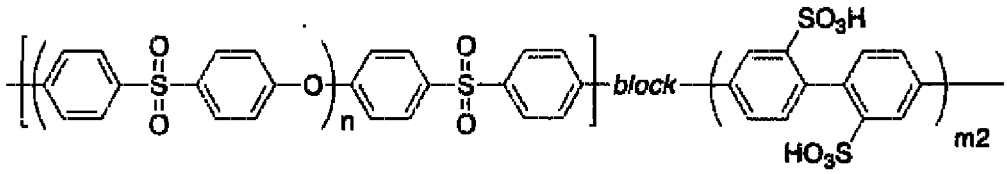

A dimethylsulfoxide solution (2.4 ml) of lithium 4,4'-dichlorobiphenyl-2,2'-disulfonate (119 mg, 0.30 mmol) and Sumika Excell PES 5200P (60 mg) manufactured by Sumitomo Chemical Co., Ltd. and 2,2'-bipyridyl (129 mg, 0.83 mmol) was heated to 70QC. Next, bis(1,5-cyclooctadiene) nickel (0) (208 mg, 0.75 mmol) was added thereto, and the mixture was stirred at 70QC for 4 hours while keeping the temperature. After being left for cooling, the reaction mixture was poured into a large amount of 6 mol/L hydrochloric acid, and a polymer precipitated was collected by filtration. The polymer was washed with methanol, then, dried under reduced pressure, thereby to give a polyarylene type block copolymer.

The results of molecular weight analysis by GPC for the obtained copolymer are shown as follows:

Mn: $1.4 \times 10^5$ [Condition 3]
Mw: $3.2 \times 10^5$ [condition 2]

In this way, a polyarylene type block copolymer with a higher molecular weight was achieved by using lithium 4,4'-dichlorobiphenyl-2,2'-disulfonate.

The polyarylene type block copolymer of the present invention, when it is used as a polymer electrolyte membrane (proton conductive membrane) in a polymer electrolyte type fuel cell, is small in humidity dependence of proton conductivity and small in the ratio of dimensional change upon swelling by water uptake. Such effect is also preferable when the polyarylene type block copolymer of the present invention is contained in a catalyst layer of a polymer electrolyte type fuel cell. In particular, when it is used as the proton conductive membrane, the fuel cell exhibits high power generation efficiency. As described above, the polyarylene type block copolymer of the present invention is industrially advantageous particularly in applications of fuel cells.

## Claims

1. A polyarylene type block copolymer comprising a block having an ion exchange group and a block having substantially no ion exchange group, wherein the main chain of the block having an ion exchange group has a polyarylene structure in which a plurality of aromatic rings are directly connected, and the ion exchange group is directly bonded to the aromatic ring composing the main chain.

2. The polyarylene type block copolymer according to claim 1, wherein the block having an ion exchange group has a structural unit represented by the following general formula (1):

$$-\left(Ar^1\right)_m- \quad (1)$$

wherein m represents an integer of 5 or more, $Ar^1$ represents a divalent aromatic group, herein, the divalent aromatic group may be substituted by a fluorine atom, an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl

group having 2-20 carbon atoms that may have a substituent: $Ar^1$ has at least one ion exchange group directly bonded to the aromatic ring composing the main chain.

**3.** The polyarylene type block copolymer according to claim 1 or 2, wherein the block having substantially no ion exchange group has a structural unit represented by the following general formula (2):

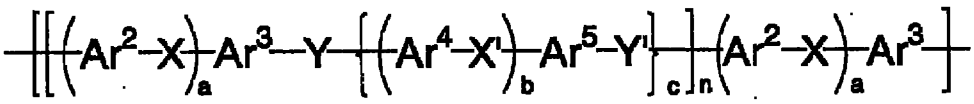

(2)

wherein a, b and c each independently represent 0 or 1, n represents an Integer of 5 or more, $Ar^2$, $Ar^3$, $Ar^4$ and $Ar^5$ each independently represent a divalent aromatic group, herein, these divalent aromatic groups may be substituted by an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent; X and X' each independently represent a direct bond or a divalent group, Y and Y' each independently represent an oxygen atom or a sulfur atom.

**4.** The polyarylene type block copolymer according to claim 2 or 3, wherein the block having an ion exchange group has a structural unit of 20 or more of m in said general formula (1).

**5.** The polyarylene type block copolymer according to any one of claims 1 to 4, wherein the ion exchange group is an acid group of any one of a sulfonic acid group, a sulfonimide group, a phosphonic acid group, and a carboxylic acid group.

**6.** The polyarylene type block copolymer according to any one of claims 2 to 5, wherein the block having an ion exchange group has a structural unit represented by the following general formula (3):

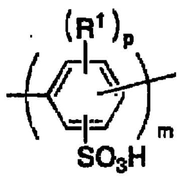

(3)

wherein m is the same as in said general formula (1), $R^1$ represents a substituent selected from a fluorine atom, an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent; p is an integer of 0 or more but not more than 3.

**7.** The polyarylene type block copolymer according to any one of claims 2 to 6, wherein the block having an ion exchange group has a structural unit represented by the following general formula (4):

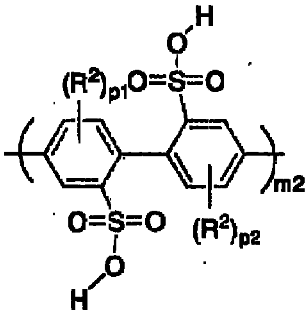

(4)

wherein $R^2$s are the same or different, represent a substituent selected from a fluorine atom, an alkyl group having 1-20 carbon atoms that may have a substituent, an alkoxy group having 1-20 carbon atoms that may have a substituent, an aryl group having 6-20 carbon atoms that may have a substituent, an aryloxy group having 6-20 carbon atoms that may have a substituent, or an acyl group having 2-20 carbon atoms that may have a substituent; m2 is an integer of 3 or more, p1 and p2 each are an integer of 0 or more but not more than 3.

**8.** The polyarylene type block copolymer according to claim 6 or 7, wherein the block having an ion exchange group has a structure represented by said general formula (3), when a connection constitution of aromatic rings in the main chain is represented by the three connection modes of (3a), (3b) and (3c) defined below, and the constituent ratio of the connection modes is denoted as a TP value shown in the following equation (I), the TP value is 0.6 or less:

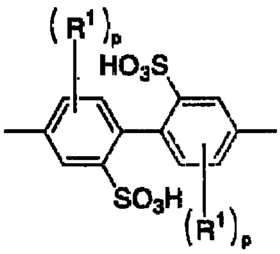

(3a)

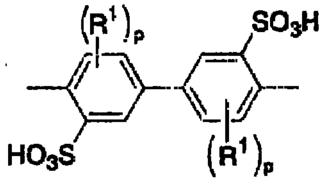

(3b)

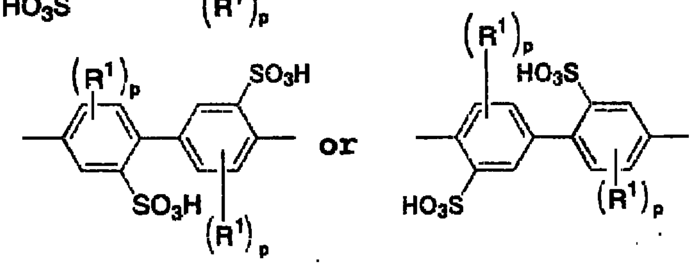

or

(3c)

wherein $R^1$ and p have the same definitions as in said general formula (3);

$$\text{TP value} = n_c / (n_a+n_b+n_c) \qquad (I)$$

wherein $n_a$ is the number of connection modes shown in the above-described (3a), $n_b$ is the number of connection modes shown in the above-described (3b), and $n_c$ is the number of connection modes shown in the above-described

(3c).

**9.** A method for production of an polyarylene type block copolymer, comprising copolymerization of a compound represented by O-$Ar^1$-Q wherein $Ar^1$ has the same definition as in said general formula (1), Q represents a leaving group; and/or a compound represented by the following general formula (5) or a salt thereof; and a compound represented by the following general formula (6):

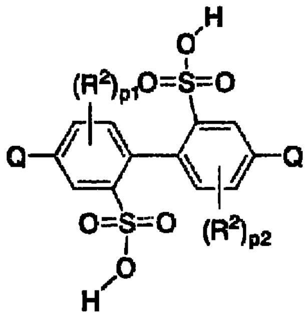

(5)

wherein $R^2$, p1 and p2 have the same definitions as in said general formula (4), Q represents a leaving group;

$$Q-\left[\left[\left(Ar^2-X\right)_a Ar^3-Y-\left\{\left(Ar^4-X'\right)_b Ar^5-Y'\right\}_c\right]_n\left(Ar^2-X\right)_a Ar^3\right]-Q \quad (6)$$

Wherein $Ar^2$, $Ar^3$, $Ar^4$, $Ar^5$, a. b, c, n, X, X', Y, and Y' have the same definitions as in said general formula (2), Q represents a leaving group.

**10.** The method for production of an polyarylene type block copolymer according to claim 9, comprising copolymerization of a compound represented by Q-$Ar^1$-Q wherein $Ar^1$ has the same definition as in said general formula (1), Q represents a leaving group; and/or a compound represented by said general formula (5); and a compound represented by said general formula (6) under the coexistence of a nickel complex.

**11.** The method for production according to claim 10, wherein the nickel complex is a complex comprising bis(cyclooctadiene) nickel (0) and 2,2'-bipyrldyl.

**12.** The method for production according to claim 10, wherein the nickel complex is a complex comprising nickel halide and 2,2'-bipyridyl, and zinc coexists.

**13.** The polyarylene type block copolymer according to any one of claims 6 to 8, obtained by the method for production according to any one of claims 9 to 12.

**14.** The polyarylene type block copolymer according to any one of claims 1 to 8 and claim 13, wherein the block having substantially no ion exchange group is a block having a repeating structure represented by the following general formula (2a):

$$-\left[\left[\left(Ar^2-X^a\right)_a Ar^3-Y-\left\{\left(Ar^4-X^b\right)_b Ar^5-Y'\right\}_c\right]_n\left(Ar^2-X^a\right)_a Ar^3\right]- \quad (2a)$$

wherein $Ar^2$, $Ar^3$, $Ar^4$, $Ar^5$, a, b, c, n, Y, and Y' have the same definitions as in said general formula (2), $X^a$ and $X^b$

each independently represent a divalent group selected from the group consisting of a direct bond, a carbonyl group, a sulfonyl group, a 2,2-isopropylidene group, a 2,2-hexafluorolsopropylidene group and a 9,9-fluorenediyl group.

**15.** The polyarylene type block copolymer according to any one of claims 1 to 8 and claims 13 to 14, wherein the ion exchange capacity is 0.5,msq/g to 4.0 meq/g.

**16.** A polymer electrolyte comprising the polyarylene type block copolymer according to any one of claims 1 to 8 and claims 13 to 15 as an effective component.

**17.** A polymer electrolyte membrane using the polymer electrolyte according to claim 16.

**18.** A polymer electrolyte composite membrane using the polymer electrolyte according to claim 16 and a porous base material.

**19.** A catalyst composition containing the polymer electrolyte according to claim 16.

**20.** A polymer electrolyte type fuel cell using the polymer electrolyte membrane according to claim 17 as a proton conductive membrane.

**21.** A polymer electrolyte type fuel cell using the polymer electrolyte composite membrane according to claim 18 as a proton conductive membrane.

**22.** A polymer electrolyte type fuel cell having a catalyst layer obtained by using the catalyst composition according to claim 19.

**INTERNATIONAL SEARCH REPORT**

International application No.
PCT/JP2006/305193

A. CLASSIFICATION OF SUBJECT MATTER
*C08G61/12*(2006.01), *H01B1/06*(2006.01), *H01M8/02*(2006.01), *H01M8/10* (2006.01)

According to International Patent Classification (IPC) or to both national classification and IPC

B. FIELDS SEARCHED

Minimum documentation searched (classification system followed by classification symbols)
*C08G61/12*(2006.01), *H01B1/06*(2006.01), *H01M8/02*(2006.01), *H01M8/10* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-238665 A (Sumitomo Chemical Co., Ltd.), 27 August, 2003 (27.08.03), Full text (Family: none) | 1-22 |
| P,X | JP 2005-248143 A (Sumitomo Chemical Co., Ltd.), 15 September, 2005 (15.09.05), Full text & WO 2005/075535 A1 | 1-22 |
| P,X | JP 2005-314452 A (Sumitomo Chemical Co., Ltd.), 10 November, 2005 (10.11.05), Full text (Family: none) | 1-22 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 May, 2006 (10.05.06) | 23 May, 2006 (23.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/305193

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-510314 A (Maxden Inc.),<br>17 November, 1994 (17.11.94),<br>Full text<br>& WO 93/04098 A1 & EP 646143 A1<br>& US 5496893 B1 & US 5512630 B1<br>& US 5539048 B1 & US 5625010 B1<br>& US 5830945 B1 & US 5869592 B1 | 1-22 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5403675 A
- JP 2001342241 A
- JP 2003113136 A
- JP 2005038834 A


### Non-patent literature cited in the description


- *Polymer Materials Science & Engineering,* 2003, vol. 89, 438